(19) Europäisches Patentamt
European Patent Office
Office européen des brevets

(11) EP 3 772 943 B1

(12) EUROPÄISCHE PATENTSCHRIFT

(45) Veröffentlichungstag und Bekanntmachung des Hinweises auf die Patenterteilung:
**06.05.2026 Patentblatt 2026/19**

(21) Anmeldenummer: **19720784.8**

(22) Anmeldetag: **12.04.2019**

(51) Internationale Patentklassifikation (IPC):
***A01N 25/30*** (2006.01) ***A01N 43/12*** (2006.01)
***A01N 43/16*** (2006.01) ***A01N 43/32*** (2006.01)
***A01N 43/34*** (2006.01) ***A01N 43/38*** (2006.01)
***A01N 43/90*** (2006.01) ***A01P 5/00*** (2006.01)
***A01P 7/00*** (2006.01)

(52) Gemeinsame Patentklassifikation (CPC):
(C-Sets verfügbar)
**A01N 43/90; A01N 25/30; A01N 43/12; A01N 43/16; A01N 43/32; A01N 43/34; A01N 43/38**
(Forts.)

(86) Internationale Anmeldenummer:
**PCT/EP2019/059475**

(87) Internationale Veröffentlichungsnummer:
**WO 2019/197635 (17.10.2019 Gazette 2019/42)**

(54) **FORMULIERUNG INSEKTIZIDER MISCHUNGEN MIT PROPYLENCARBONAT**

FORMULATION OF INSECTICIDAL MIXTURES WITH PROPYLENE CARBONATE

FORMULATION DE MÉLANGES INSECTICIDES AVEC DU CARBONATE DE PROPYLÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **13.04.2018 EP 18167288**

(43) Veröffentlichungstag der Anmeldung:
**17.02.2021 Patentblatt 2021/07**

(73) Patentinhaber: **Bayer Aktiengesellschaft**
**51373 Leverkusen (DE)**

(72) Erfinder:
- **GAERTZEN, Oliver**
  **50931 Köln (DE)**
- **DÜLLBERG, Tobias**
  **51375 Leverkusen (DE)**
- **HILZ, Emilia**
  **42781 Haan (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
**WO-A2-2008/037375 US-A1- 2008 255 204**
**US-A1- 2011 281 727**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**A01N 43/90, A01N 43/12**

## Beschreibung

Die Erfindung betrifft insektizide Wirkstoffformulierungen, mit mindestens einem gelösten und einem in fester Form vorliegenden Wirkstoff mit guter Lagerstabilität bei hohen und niedrigen Temperaturen und einer hohen Wirkstoffpenetration. Die Erfindung ist im beigefügten Anspruchssatz beschrieben.

Systemische agrochemische Wirkstoffe, insbesondere systemische Insektizide, brauchen zur Entfaltung der biologischen Wirkung eine Formulierung, welche es ermöglicht, dass die Wirkstoffe in die Pflanzen bzw. die Zielorganismen aufgenommen werden. Die beste Wirkung kann dabei erreicht werden indem die entsprechenden Wirkstoffe entweder in wäßriger Lösung verdünnt für die Anwendung und/oder bereits im Konzentrat bevorzugt im gelösten Zustand vorliegen, so daß einen hohe Wirkstoffkonzentration jederzeit verfügbar ist.

Dies ist immer dann der Fall wenn Wirkstoffe oder Wirkstoffkombinationen als Emulsionskonzentrat (EC) oder Soluble Liquid (SL) formuliert werden, während die Verfügbarkeit gelöster und suspendierter Wirkstoffe über das Lösungsgleichgewicht beschränkt ist.

Darüber hinaus kann die biologische Wirkung durch Zugabe von geeigneten Adjuvantien / Penetrationsförderern ggf. weiter erhöht werden.

Wie oben erwähnt, liegen in Formulierungen wie Suspensionskonzentraten (SC) und / oder ölbasierenden Suspensionskonzentraten (OD) die Wirkstoffe oder Wirkstoffkombinationen nicht gelöst sondern als Feststoff in partikulärer Form vor, so daß eine gute und biologische Verfügbarkeit dieser Wirkstoffe in den Formulierungen typischerweise nicht gegeben ist. Hier kann die biologische Wirkung im Wesentlichen nur durch Zugabe von geeigneten Adjuvantien / Penetrationsförderern erhöht werden, was aber im Vergleich zu den zuvor beschriebenen EC oder SL-Formulierungen dennoch zu einer verringerten biologischen Wirkung führt.

Es ist bekannt, daß agrochemische Wirkstoffe sich voneinander u.a. in ihren physikochemischen Eigenschaften wie beispielsweise Löslichkeit in Wasser, Lösungsmitteln und/oder Ölen, Schmelz- und Siedepunkt, Polarität, Molgewicht, etc. unterscheiden. Diese Eigenschaften beeinflussen die Formulierbarkeit der Wirkstoffe. Viele bekannte agrochemische Wirkstoffe weisen beispielsweise einen hohen Schmelzpunkt auf und können daher Temperaturbelastungen standhalten wie sie beispielsweise bei der Herstellung von Suspensionskonzentraten auftreten. Dagegen können Wirkstoffe mit einem niedrigen Schmelzpunkt diesen Herstellbedingungen nur schwer standhalten und nur sehr eingeschränkt als lagerstabile Suspensionen hergestellt werden, da bei höheren Temperaturen mit Erweichen oder Schmelzen des Wirkstoffs zu rechnen ist. Liegt der Wirkstoff jedoch nicht mehr in kristalliner Form vor, ist die physikalische Stabilität des formulierten Produktes oft stark herabgesetzt und seine praktische Anwendbarkeit nicht mehr gegeben.

Es ist darüber hinaus bekannt, daß organische Substanzen unterschiedliche Wasserlöslichkeiten aufweisen und diese Wasserlöslichkeiten, je nach chemischer Beschaffenheit, pH-abhängig sein können, z.B. durch Salzbildung.

Ferner ist bekannt, daß es oft zweckmäßig ist, agrochemische Wirkstoffe miteinander zu kombinieren, um z.B. Resistenzbildungen (z.B. durch Kombination verschiedener Wirkmechanismen) vorzubeugen, oder aber wenn Schädlinge auf verschiedene Wirkstoffe unterschiedlich gut ansprechen, oder um das Wirkspektrum der Mischung zu erweitern. Durch die Mischung der Wirkstoffe kann im letzteren Fall beispielsweise die wirksame Aufwandmenge deutlich reduziert werden, wodurch eine spezifische Bekämpfung von Schadinsekten möglich ist, ohne Nützlinge übermäßig oder überhaupt zu schädigen. Ein anderer Grund für die Verwendung von Wirkstoffmischungen könnte die unterschiedliche Wirkdauer (Halbwertzeit in der Pflanze oder im Boden) der Wirkstoffe sein, so daß mit nur einer Behandlung ein möglichst langer Schutz generiert wird.

Stabile Suspensionskonzentrate zeichnen sich dadurch aus dass sie über einen längeren Zeitraum (12-24 Monate) und über einen breiten Temperaturbereich (0 bis 54°C) sowohl physikalisch als auch chemisch lagerstabil sind. Dieser breite Temperaturbereich ist erforderlich, damit vorteilhafterweise nur eine einzige Formulierung mit gleichen Wirkstoffen bzw. Wirkstoffkombinationen in unterschiedlichen klimatischen Regionen eingesetzt werden kann.

Die Lagerstabilität von Suspensionskonzentraten wird u.a. dadurch gekennzeichnet dass Gebinde dieser Suspensionskonzentrate über den Zeitraum der Lagerung keine oder nur wenig Phasentrennung aufweisen. Ein weiterer Parameter für die Stabilität von Suspensionskonzentraten ist beispielsweise die Stabilität der Dispersion im Konzentrat welche sich in der Anwesenheit bzw. Abwesenheit von Agglomeraten im Konzentrat äußert.

Aus dem Stand der Technik ist auch Propylencarbonat als Lösungsmittel für agrochemische Wirkstoffe bekannt. So beschreibt beispielsweise die WO 2006/089661 (US 2008/0255204 A1, Davies et al.) Propylencarbonat-haltige agrochemische Formulierungen in denen die agrochemischen Wirkstoffe in gelöster Form vorliegen. Daraus lassen sich keinerlei Rückschlüsse ziehen auf die physikalische Stabilität von komplexen Suspensionskonzentraten wie sie in der vorliegenden Erfindung beschrieben werden, wobei die erfindungsgemäßen Formulierungen auf Propylencarbonat basieren und Kombinationen von gelösten und dispergierten Wirkstoffen in Gegenwart von dispergierten Ammoniumsalzen und bestimmten polymeren Tensiden enthalten. In seiner Gesamtheit ist die WO 2006/089661 auf agrochemische Zubereitungen mit einem einzelnen, gelösten Wirkstoff gerichtet. Potentielle Mischungen mit weiteren löslichen Wirkstoffen werden lediglich beispielhaft in [0009] genannt aber nicht näher ausgeführt. Abschnitt [0015] beschreibt die Verwendung von Propylencarbonat u.a. als Penetrationshilfmittel für Pflanzenschutzmittel, was auch in [0041] - [0050]

beschrieben wird. Allerdings wird die penetrationsvermittelnde Wirkung lediglich mit einem Wirkstoff (Imidacloprid) beispielhaft belegt; darüber hinaus ist die in der WO 2006/089661 gezeigte penetrationsvermittelnde Wirkung von Propylencarbonat in Formulierungen im Vergleich zu den Formulierungen ohne Propylencarbonat eher als gering anzusehen. Auf Grund der strukturellen Divergenz von Pflanzenschutzmitteln und den daraus resultierenden unterschiedlichen physikochemischen Eigenschaften läßt sich auch für den Experten nicht unmittelbar schließen, dass diese penetrationsvermittelnde Wirkung sich auch auf andere Wirkstoffe geschweige denn auf Kombinationen von verschiedenen Wirkstoffen, insbesondere, wenn diese in unterschiedlichen Phasen vorliegen, übertragen lassen.

In der WO 2011/029552 werden Alkylpolypropylenglycolpolyethylenglycol (z.B. Antarox B/848)-haltige agrochemische Formulierungen beschrieben in denen diese Tensidklasse als Emulgator und/oder Penetrationsvermittler für agrochemische Wirkstoffe eingesetzt wird.

Darüber hinaus beschreibt WO 2003/000053 bestimmte Alkylpolypropylenglycolpolyethylenglycole wie z.B. Atlas G5000 als Dispergiermittel für organische Pflanzenschutzmittel in Ölen.

Der Einsatz von Ammoniumsalzen zur Wirksteigerung von agrochemischen Wirkstoffen ist in der Literatur bekannt; so beschreibt beispielsweise die WO 2011/131623 (US 2011/0281727 A1, Fischer et al.) insektizide und/oder herbizide Zubereitungen basierend auf Heterocyclyl-basierten Tetramsäuren mit verbesserter Wirksamkeit in Gegenwart von Ammoniumsalzen. Ferner beschreibt die WO 2007/068428 wirksteigernde Effekte von phenylsubstituierten cyclischen Ketoenolen in Gegenwart von Ammoniumsalzen. Die WO 2011/131623 ist gerichtet auf eine Kombination eines einzelnen Wirkstoffes ausgewählt aus einer Gruppe von Substanzen der Formel [I] und einem organischen oder anorganischen Ammonium- oder Phosphoniumsalz sowie dessen Anwendung in einer wäßrigen Spritzbrühe in Gegenwart oder Abwesenheit eines geeigneten Penetrationsvermittlers. Ausgehend von der Lehre der WO 2011/131623 lassen sich für den Experten keine Rückschlüsse auf Formulierungen mit Kombinationen weiterer Wirkstoffe, sowie auf die physikalische und chemische Stabilität dieser Mischungsformulierungen ziehen. Geeignete Penetrationsvermittler werden in den Abschnitten [0111] bis [0171] breit beschrieben und in [0178] allgemein beansprucht, allerdings wird lediglich Rapsölmethylester als Beispiel für ein Pflanzenölderivat sowie Genapol LRO als Beispiel für ein anionisches Alkoholethersulfat ausgeführt. Propylencarbonat genügt mit seiner chemischen Beschaffenheit weder den ausgeführten Beispielen noch den schwerpunktmäßig als Penetrationsvermittler beschriebenen Substanzen. Somit läßt sich weder ein unmittelbarer Zusammenhang zwischen einer penetrationsvermittelnden Wirkung von Propylencarbonat für einer Verbindung ausgewählt aus einer Gruppe von Substanzen der Formel [I] noch für Verbindungen, welche nicht von der Beschreibung durch Formel [I] erfaßt werden, herstellen.

Eine Formulierung mit guter Penetration eines gelösten und eines ungelösten Wirkstoffes gemäß der vorliegenden Erfindung wird in WO 2011/131623 weder beschrieben noch nahegelegt.

Ebenso sind ölbasierte Zubereitungen, welche Ammoniumsalze enthalten, in der Literatur bekannt. So beschreibt beispielsweise die WO 2008/151725 Adjuvans-Zusammensetzungen auf Basis von Ölen, in denen Ammoniumsalze in dispergierter Form vorliegen. Darüber hinaus beschreibt die EP 2193712 A1 ölbasierte agrochemische Formulierungen, in denen Ammoniumsalze in dispergierter Form vorliegen. Suspensionen von Ammoniumsalzen in wassermischbaren Lösungsmitteln sind hier jedoch nicht beschrieben.

Zusammenfassend gibt aber keines der oben genannten Dokumente, ob einzeln oder in der Zusammenschau, einen Hinweis, daß sich Alkylpolypropylenglycolpolyethylenglycole, wie z.B. Antarox B/848, als effektive Dispergiermittel von hoch geladenen, anorganischen Ammoniumsalzen in einem polaren, wasserlöslichen Lösungsmittel, wie Propylencarbonat, insbesondere in Verbindung mit suspendierten und gelösten Wirkstoffen, einsetzen lassen.

Lösliche wasserbasierte Konzentrate von Tetramsäurederivaten sind aus dem Stand der Technik bekannt, z.B. aus der WO 2009/115262. Aufgrund von Löslichkeitsproblemen sind diese nicht mit bestimmten Pflanzenschutzmitteln und Formulierinhaltsstoffen kombinierbar. Darüber hinaus weisen diese wasserbasierten SL-Formulierungen in der Regel hohe pH-Werte auf, die ebenfalls zu Inkompatibilitäten mit bestimmten basensensitiven Pflanzenschutzmitteln und Formulierinhaltsstoffen führen.

Aus WO 2008/037375 sind wässrige lagerstabile Suspensionskonzentrate bekannt, die Spirotetramat, Imidacloprid, einen Penetrationsförderer, ein Adjuvans aus der Gruppe der Polyglyzerinderivate sowie ein nicht-ionisches oder anionisches Tensid enthalten.

Die Aufgabe war es nun, eine stabile Formulierung zu entwickeln, die aus einer Kombination eines gelösten Wirkstoffs mit einem suspendierten Wirkstoff besteht, gute Bioverfügbarkeit und Penetrationsvermögen - beider Wirkstoffe - aufweist, und die sowohl bei hohen als auch niedrigen Temperaturen eine gute Lagerstabilität aufweist. Vorzugsweise handelt es sich bei den Wirkstoffen um Insektizide.

Diese Aufgabe wurde durch die unten beschriebenen Formulierungen enthaltend eine Wirkstoffkombination sowie ein Ammoniumsalz und einen Carbonatester als Lösungsmittel gelöst.

Gegenstand der Erfindung sind deshalb wasserfreie Zusammensetzungen enthaltend:

a) mindestens einen bei Raumtemperatur festen Wirkstoff a) gemäß Formel I,

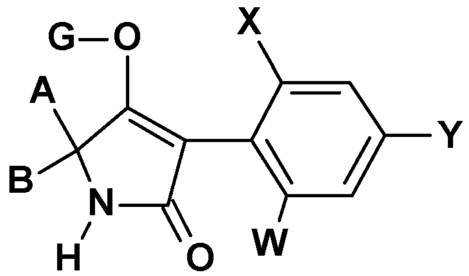

(I)

in welcher

W und Y unabhängig voneinander für Wasserstoff, C1-C4-Alkyl, Chlor, Brom, Jod oder Fluor stehen,

X für C1-C4-Alkyl, C1-C4-Alkoxy, Chlor, Brom oder Jod steht,

A, B und das Kohlenstoffatom, an das sie gebunden sind, für C3-C6-Cycloalkyl stehen, welches durch eine gegebenenfalls durch C1-C4-Alkyl oder $C_1$-$C_4$-Alkoxy-$C_1$-$C_2$-alkyl-substituierte Alkylendioxyl-Gruppe substituiert ist, die mit dem Kohlenstoffatom, an das sie gebunden ist, ein 5-Ring- oder 6-Ringketal bildet,

G für Wasserstoff (a) oder für eine der Gruppen

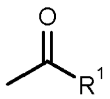 (b), 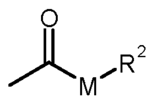 (c),

E (d)
steht,
in welchen

E für ein Metallion oder ein Ammoniumion steht,

M für Sauerstoff oder Schwefel steht,

R1 für geradkettiges oder verzweigtes C1-C6-Alkyl steht,

R2 für geradkettiges oder verzweigtes C1-C6-Alkyl steht,

b) mindestens einen in einem organischen Lösungsmittel löslichen Wirkstoff, verschieden von a), ausgewählt aus der Gruppe bestehend aus Imidacloprid, Clothianidin, Flupyradifurone und Acetamiprid,

c) mindestens ein Ammoniumsalz ausgewählt aus der Gruppe bestehend aus Ammoniumcarbonat, Ammoniumhydrogensulfat, Ammoniumsulfat (AMS), Ammoniumhydrogencarbonat und Diammoniumhydrogenphosphat (DAHP),

d) mindestens ein Dispergiermittel ausgewählt aus der Gruppe bestehend aus Alkylpolypropylenglycolpolyethylenglycol-Verbindungen der allgemeinen Formel (III-a),

R——O——A——B——H

**(III-a)**

wobei R ein C1-C4-Fragment ist,
A ein Polypropylenglycol-Fragment bestehend aus 10 bis 40 Propylenoxid- (PO-) Einheiten (Formel III-b) ist,
B ein randomerisiert copolymerisiertes Polyethylenglycol-Polypropylenglycol-Fragment bestehend aus 10-50 Ethylenoxid- (EO-) Einheiten (Formel III-c) zusammen mit 0-10 Propylenglycol- (PO-) Einheiten ist,

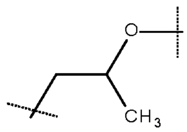

Formel III-b

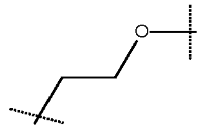

Formel III-c

und Alkylpolypropylenglycolpolyethylenglycol-Verbindungen der allgemeinen Formel (IIId)

$$R\text{-}O\text{-}(C_mH_{2m}O)_x\text{-}\ (C_nH_{2n}O)_y\text{-}R' \qquad \text{(IIId)}$$

in welcher

R und R' unabhängig voneinander für Wasserstoff, einen linearen $C_1$- bis $C_5$-Alkylrest oder einen verzweigten $C_3$- oder $C_4$-Alkylrest stehen;
m gleich 2 oder 3 ist;
n gleich 2 oder 3 ist;
x gleich 5 bis 150 ist; und
y gleich 5 bis 150 ist,
wobei ein Rest n oder m die Bedeutung 2 und der andere Rest n oder m die Bedeutung 3 aufweist,

e) ein oder mehrere Tenside ausgewählt aus der Gruppe bestehend aus Polycarboxylat-Typen, Salzen von sulfatierten Formaldehyd-Kondensationsprodukten mit Alkylaromaten, Salzen von sulfatierten Formaldehyd-Kondensationsprodukten mit Ditolylether, Salzen von sulfatierten Formaldehyd-Kondensationsprodukten mit Cyclohexanon, und Ligninsulfonaten und deren Salzen,

f) mindestens einen wasserunlöslichen Füllstoff ausgewählt aus der Gruppe bestehend aus modifizierten natürlichen Silikaten, Silikatmineralien, synthetischen Silikaten und pyrogenen Kieselsäuren, Attapulgite und Füllstoffe auf Basis synthetischer Polymere,

g) mindestens ein Lösungsmittel ausgewählt aus der Gruppe bestehend aus Dimethylcarbonat, Diethylcarbonat, Dipropylcarbonat, Diisopropylcarbonat, Dibutylcarbonat und dessen Isomere, Diphenylcarbonat, Ethylencarbonat, Trimethylencarbonat, Propylencarbonat, Butylencarbonat, Pentylencarbonat, Hexylencarbonat und Octylencarbonat,

wobei Wirkstoff a) im gewählten Lösungsmittel g) unlöslich oder nur wenig löslich ist.

Erfindungsgemäß wurde herausgefunden, dass entsprechende Zusammensetzungen gute penetrationsfördernde Eigenschaften für beide enthaltenen agrochemischen Wirkstoffe und eine hohe Stabilität aufweisen. Dieses war bei den unterschiedlichen Eigenschaften der Wirkstoffe a) und b) überraschend.

In der vorliegenden Erfindung können in Formeln, z.B. Formel (I), gegebenenfalls substituierte Reste, sofern nichts anderes angegeben ist, einfach oder mehrfach substituiert sein, wobei bei Mehrfachsubstitutionen die Substituenten gleich oder verschieden sein können.

Ferner sind in der vorliegenden Erfindung genannten Vorzugsbereichen die verschiedenen Vorzugsebenen so zu verstehen, daß diese permutierend miteinander kombiniert werden können, in jedem Fall sind aber gleiche Vorzugsebenen und insbesondere die jeweils am meisten bevorzugte Ausführungsform / Vorzugsebene miteinander zu kombinieren und als solche Kombination auch offenbart.

Ebenso sollen Zusammensetzungen wie in der vorliegenden Anmeldung beschrieben als offenbart angesehen werden, die nur aus den essentiellen Komponenten (nicht optionale Komponenten) bestehen.

Raumtemperatur im Sinne der vorliegenden Erfindung bedeutet, soweit nicht anders angegeben, eine Temperatur von 20°C bis 25 °C.

Die Komponenten a - h werden im folgenden weiter definiert.

a. Bei Raumtemperatur fester Wirkstoff

Erfindungsgemäß ist der bei Raumtemperatur feste Wirkstoff im gewählten Lösungsmittel g) unlöslich oder nur wenig löslich. Wenig löslich oder unlöslich im Sinne der vorliegenden Erfindung sind bei Raumtemperatur feste Wirkstoffe mit einer Löslichkeit bei 20°C im gewählten Lösungsmittel g) vorzugsweise kleiner / gleich 5 g/L beträgt, weiter bevorzugt kleiner / gleich 4 g/L, noch weiter bevorzugt kleiner / gleich 2,5 g/L, und besonders bevorzugt kleiner / gleich 1 g/L.

Die erfindungsgemäßen Zusammensetzungen enthalten als Komponente a) mindestens eine Verbindung der Formel (I)

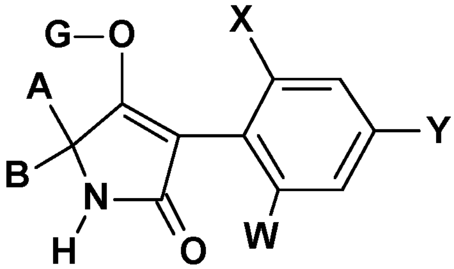

(I)

in welcher

W und Y unabhängig voneinander für Wasserstoff, $C_1$-$C_4$-Alkyl, Chlor, Brom, Jod oder Fluor stehen,

X für $C_1$-$C_4$-Alkyl, $C_1$-$C_4$-Alkoxy, Chlor, Brom oder Jod steht,

A, B und das Kohlenstoffatom, an das sie gebunden sind, für $C_3$-$C_6$-Cycloalkyl stehen, welches durch eine gegebenenfalls durch $C_1$-$C_4$-Alkyl oder $C_1$-$C_4$-Alkoxy-$C_1$-$C_2$-alkyl-substituierte Alkylendioxyl-Gruppe substituiert ist, die mit dem Kohlenstoffatom, an das sie gebunden ist, ein 5-Ring- oder 6-Ringketal bildet,

G für Wasserstoff (a) oder für eine der Gruppen

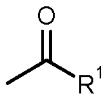 (b), 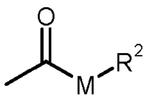 (c),

E (d)
stehen,
in welchen

E für ein Metallion oder ein Ammoniumion steht,

M für Sauerstoff oder Schwefel steht,

$R^1$ für geradkettiges oder verzweigtes $C_1$-$C_6$-Alkyl steht,

$R^2$ für geradkettiges oder verzweigtes $C_1$-$C_6$-Alkyl steht.

Bevorzugt einsetzbar sind Tetramsäurederivate der oben genannten Formel (I), in welcher die Reste die folgende Bedeutung haben:

W steht besonders bevorzugt für Methyl,

X steht besonders bevorzugt für Chlor oder Methyl, (besonders bevorzugt für Methyl),

Y steht besonders bevorzugt für Chlor, Brom oder Methyl,

A, B und das Kohlenstoffatom, an das sie gebunden sind, stehen besonders bevorzugt für gesättigtes $C_6$-Cycloalkyl, welches mit einer Alkylendioxyl-Gruppe substituiert ist, die mit dem Kohlenstoffatom, an das sie gebunden ist, ein 5-Ring- oder 6-Ringketal bildet,

G steht besonders bevorzugt für Wasserstoff (a) oder für eine der Gruppen

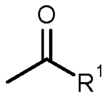 (b), 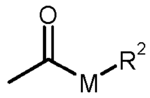 (c),

E (d),
in welchen

M für Sauerstoff steht,

E für ein Metallionenäquivalent oder ein Ammoniumion steht, (hervorgehoben für Natrium oder Kalium)

$R^1$ steht besonders bevorzugt für geradkettiges oder verzweigtes $C_1$-$C_4$-Alkyl,

$R^2$ steht besonders bevorzugt für geradkettiges oder verzweigtes $C_1$-$C_4$-Alkyl.

Besonders bevorzugt einsetzbar sind Tetramsäurederivate der oben genannten Formel (I) mit G = Wasserstoff (a).

Ebenfalls besonders bevorzugt einsetzbar sind Tetramsäurederivate der oben genannten Formel (I) mit G = E (d).

Insbesondere bevorzugt einsetzbar sind Tetramsäurederivate der oben genannten Formel (I), in welcher die Reste die folgende Bedeutung haben:

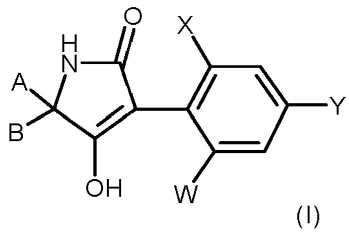

(I)

| **Bsp.-Nr.** | **W** | **X** | **Y** | **A** | **B** | **bekannt aus** WO 06/089633**; Bsp.-Nr.** |
|---|---|---|---|---|---|---|
| I-1 | $CH_3$ | $CH_3$ | $CH_3$ | 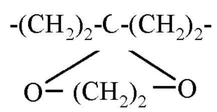 | | I-1-a-2 |
| I-2 | $CH_3$ | $CH_3$ | Cl | 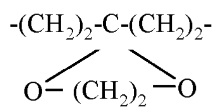 | | I-1-a-4 |
| I-3 | $CH_3$ | $CH_3$ | Br | 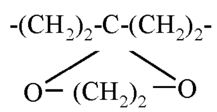 | | I-1-a-26 |
| I-4 | $CH_3$ | $CH_3$ | $CH_3$ | 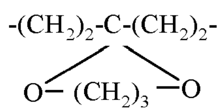 | | I-1-a-18 |
| I-5 | $CH_3$ | $CH_3$ | Cl | 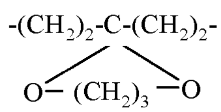 | | I-1-a-14 |
| I-6 | $CH_3$ | $CH_3$ | Br | 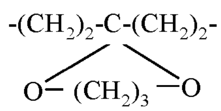 | | I-1-a-19 |

In einer besonders bevorzugten Ausführungsform ist Komponente a) eine Verbindung der Formel

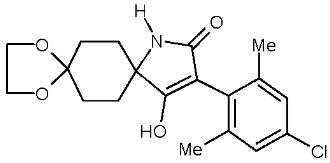
(I-2).

Die Verbindung I-2 wird bevorzugt in Form ihrer thermodynamisch stabilsten polymorphen Struktur eingesetzt. Diese Kristallstruktur sowie weitere physikalische Daten wurden wie folgt bestimmt:

Probenvorbereitung:

Die Verbindung I-2 ($C_{19}H_{22}ClNO_4$ / MW = 363.84 g/mol) wurde aus Methanol kristallisiert und bei Raumtemperatur getrocknet, wobei Modifikation A erhalten wurde.
Die Modifikation A von I-2 kann durch Röntgen-Pulver-Diffraktometrie auf Basis der entsprechenden Beugungsdiagramme charakterisiert werden, die bei 25°C und mit Cu-K$\alpha$ 1 Strahlung (1.5406 Å) aufgenommen wurden (FIGUR 1).
Die Modifikation A gemäß der vorliegenden Erfindung zeigt mindestens 3, bevorzugt mindestens 5, weiter bevorzugt mindestens 7, noch weiter bevorzugt mindestens 10, und am meisten bevorzugt alle Reflexionen, wie sie in FIGUR 1 wiedergegeben werden:
Die Modifikation A gemäß der vorliegenden Erfindung ist weiterhin durch das Röntgenbeugungsdiagramm dargestellt in Figur I charakterisiert.
Kristallographische Untersuchungen an Einkristallen der Modifikation A zeigten, daß die Kristallstruktur monoklin ist. Die Elementarzelle hat die Raumgruppe $P2_1/c$.

**Tabelle 2:** Kristallographische Eigenschaften der Modifikation A

| Parameter | *Modifikation A* |
|---|---|
| Kristallsystem | Monoklin |
| Raumgruppe | $P2_1/c$ |
| a in Å | 11.66544(14) |
| b in Å | 9.50603(10) |
| c in Å | 16.66907(19) |
| $\alpha$ | 90 |
| $\beta$ | 110.2045(13) |
| $\gamma$ | 90 |
| Z | 4 |
| Dichte (berechnet) | 1.393 g/cm$^3$ |
| a, b, c = Länge der Seiten der Elementarzelle<br>$\alpha$, $\beta$, $\gamma$ = Winkel der Elementarzelle<br>Z = Anzahl der Moleküle in der Elementarzelle | |

**Tabellen 2a/b:** Kristallographische Daten / Reflexe[°2Theta] der Modifikation A

| 2a | 2b |
|---|---|
| [°2Theta] | Reflexe [°2Theta] |
| Modifikation A | Modifikation A |
| 11,3 | 8,0 |
| 14,6 | 10,8 |
| 16,0 | 11,3 |
| 20,1 | 12,2 |

(fortgesetzt)

| 2a | 2b |
|---|---|
| [°2Theta] | Reflexe [°2Theta] |
| Modifikation A | Modifikation A |
| 21,7 | 14,6 |
| 22,7 | 16,0 |
| 23,1 | 17,6 |
| 24,5 | 18,4 |
| 28,2 | 19,4 |
| 29,0 | 20,1 |
| | 21,7 |
| | 22,7 |
| | 23,1 |
| | 23,8 |
| | 24,5 |
| | 25,9 |
| | 26,4 |
| | 28,2 |
| | 29,0 |
| | 29,4 |
| | 30,1 |
| | 30,6 |
| | 32,2 |
| | 36,2 |
| | 37,4 |
| | 38,2 |
| | 39,1 |

Die polymorphe Form der Modifikation A von I-1 kann durch IR-Spektroskopie anhand des entsprechenden Spektrums bestimmt werden, das bei 25°C unter Verwendung eines Diamant-ATR Gerätes bei einer Auflösung von 4 $cm^{-1}$ (FIGUR 2) aufgenommen wurde. Die Modifikation A der vorliegenden Erfindung zeigt mindestens 3, bevorzugt mindestens 5, weiter bevorzugt mindestens 7, und besonders bevorzugt alle Banden, wie sie in Figur 2 zu sehen und in Tabelle 2c beschrieben sind.

Tabelle 2c) IR-Banden [$cm^{-1}$]

| Bandenmaxima [$cm^{-1}$] | Bandenmaxima [$cm^{-1}$] |
|---|---|
| Modifikation A | |
| 3378 | 1133 |
| 2969 | 1109 |
| 2955 | 1088 |
| 2943 | 1045 |
| 2924 | 1036 |
| 2876 | 1027 |
| 2858 | 1015 |
| 2326 | 997 |

(fortgesetzt)

| Bandenmaxima [$cm^{-1}$] | Bandenmaxima [$cm^{-1}$] |
|---|---|
| Modifikation A | |
| 1637 | 980 |
| 1592 | 965 |
| 1575 | 946 |
| 1564 | 936 |
| 1470 | 903 |
| 1444 | 869 |
| 1438 | 856 |
| 1428 | 821 |
| 1394 | 783 |
| 1372 | 769 |
| 1344 | 748 |
| 1325 | 704 |
| 1317 | 691 |
| 1297 | 659 |
| 1272 | 639 |
| 1247 | 625 |
| 1194 | 573 |
| 1157 | 563 553 |

In einer alternativen Ausführungsform handelt es sich bei Komponente a) um Tetramsäuren der Formel (II)

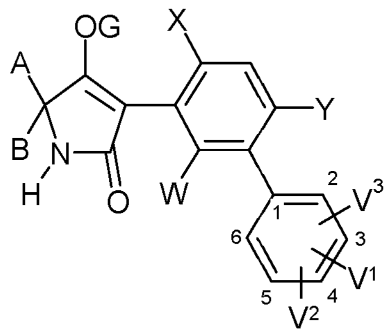

(II)

in welcher

W und Y unabhängig voneinander für Wasserstoff, $C_1$-$C_4$-Alkyl, Chlor, Brom, Jod oder Fluor stehen,

X für $C_1$-$C_4$-Alkyl, $C_1$-$C_4$-Alkoxy, Chlor, Brom oder Jod steht,

$V^1$ für Wasserstoff, Halogen, $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_4$-Halogenalkyl, $C_1$-$C_4$-Halogenalkoxy, Nitro oder Cyano steht,

$V^2$ für Wasserstoff, Halogen, $C_1$-$C_6$-Alkyl oder $C_1$-$C_6$-Alkoxy steht,

$V^3$ für Wasserstoff oder Halogen steht,

A, B und das Kohlenstoffatom an das sie gebunden sind, für gesättigtes $C_5$-$C_6$-Cycloalkyl stehen, worin ein Ringglied durch Sauerstoff ersetzt ist und welches gegebenenfalls einfach durch $C_1$-$C_8$-Alkyl, $C_1$-$C_8$-Alkoxy oder $C_1$-$C_6$-Alkyloxy-$C_1$-$C_6$-alkyl substituiert ist,

G für Wasserstoff (a) oder für eine der Gruppen

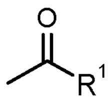 (b), 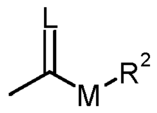 (c),

E (d) steht,
in welchen

E für ein Metallion oder ein Ammoniumion steht,

L für Sauerstoff oder Schwefel steht und

M für Sauerstoff oder Schwefel steht,

$R^1$ für geradkettiges oder verzweigtes $C_1$-$C_6$-Alkyl steht,

$R^2$ für geradkettiges oder verzweigtes $C_1$-$C_6$-Alkyl steht.

Besonders bevorzugt einsetzbar sind Tetramsäurederivate der oben genannten Formel (I), in welcher die Reste die folgende Bedeutung haben:

W steht besonders bevorzugt für Wasserstoff oder Methyl,

X steht besonders bevorzugt für Chlor oder Methyl,

Y steht besonders bevorzugt für Wasserstoff

$V^1$ steht besonders bevorzugt für Fluor oder Chlor, (hervorgehoben für Fluor oder Chlor in der 4-Position),

$V^2$ steht besonders bevorzugt für Wasserstoff oder Fluor (hervorgehoben für Fluor in der 3-Position),

$V^3$ steht besonders bevorzugt für Wasserstoff oder Fluor (hervorgehoben für Fluor in der 5-Position),

A, B und das Kohlenstoffatom, an das sie gebunden sind, stehen besonders bevorzugt für gesättigtes $C_6$-Cycloalkyl, in welchem ein Ringglied durch Sauerstoff ersetzt ist,

G steht besonders bevorzugt für Wasserstoff (a) oder für eine der Gruppen

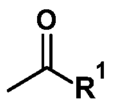 (b), 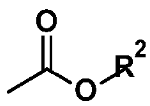 (c),

E (d),
in welchen

E besonders bevorzugt für ein Metallionenäquivalent oder ein Ammoniumion steht, (hervorgehoben für Natrium oder Kalium),

$R^1$ besonders bevorzugt für geradkettiges oder verzweigtes $C_1$-$C_4$-Alkyl steht,

$R^2$ besonders bevorzugt für geradkettiges oder verzweigtes $C_1$-$C_4$-Alkyl steht.

Hervorgehoben bevorzugt einsetzbar sind Tetramsäurederivate der oben genannten Formel (I) mit G = Wasserstoff (a).
Ebenfalls hervorgehoben bevorzugt einsetzbar sind Tetramsäurederivate der oben genannten Formel (I) mit G = E (d).
Insbesondere bevorzugt einsetzbar sind Tetramsäurederivate der oben genannten Formel (II), in welcher die

Reste die folgende Bedeutung haben:

| **Bsp.-Nr.** | **A B** | **W** | **X** | **Y** | **$V^1$** | **$V^2$** | **$V^3$** | **G** | **bekannt aus** WO08/067911 |
|---|---|---|---|---|---|---|---|---|---|
| II- 1 | $-(CH_2)_2-O-(CH_2)_2-$ | H | Cl | H | 4-F | H | H | H | I-1-a-13 |
| II-2 | $-(CH_2)_2-O-(CH_2)_2-$ | H | Cl | H | 4-F | 3-F | H | H | I-1-a-21 |
| II-3 | $-(CH_2)_2-O-(CH_2)_2-$ | H | Cl | H | 4-F | 3-F | 5-F | H | I-1-a-30 |
| II-4 | $-(CH_2)_2-O-(CH_2)_2-$ | H | $CH_3$ | H | 4-F | H | H | H | I-1-a-1 |
| II-5 | $-(CH_2)_2-O-(CH_2)_2-$ | H | $CH_3$ | H | 4-F | 3-F | H | H | I-1-a-3 |
| II-6 | $-(CH_2)_2-O-(CH_2)_2-$ | H | $CH_3$ | H | 4-F | 3-F | 5-F | H | I-1-a-28 |
| II-7 | $-(CH_2)_2-O-(CH_2)_2-$ | $CH_3$ | $CH_3$ | H | 4-F | H | H | H | I-1-a-4 |
| II-8 | $-(CH_2)_2-O-(CH_2)_2-$ | $CH_3$ | $CH_3$ | H | 4-F | 3-F | H | H | I-1-a-5 |
| II-9 | $-(CH_2)_2-O-(CH_2)_2-$ | $CH_3$ | $CH_3$ | H | 4-F | 3-F | 5-F | H | I-1-a-25 |

In einer besonders bevorzugten alternativen Ausführungsform ist a)

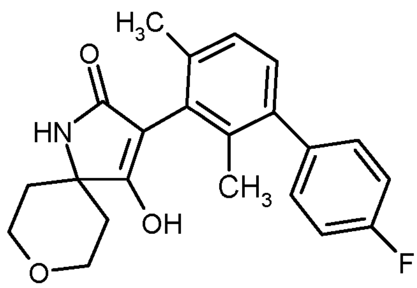

(II-7).

b. Löslicher Wirkstoff

Der lösliche Wirkstoff b) ist ausgewählt aus der Gruppe bestehend aus Imidacloprid, Clothianidin, Flupyradifurone und Acetamiprid.

Ganz besonders bevorzugt ist Wirkstoff b) Flupyradifurone.

c. Ammoniumsalz

Das Ammoniumsalz ist ausgewählt aus der Gruppe bestehend aus Ammoniumcarbonat, Ammoniumhydrogensulfat, Ammoniumsulfat (AMS), Ammoniumhydrogencarbonat und Diammoniumhydrogenphosphat (DAHP).

Besonders bevorzugt sind c) DAHP und AMS.

d. Dispergiermittel

Komponente d) ist ausgewählt aus der Gruppe bestehend aus Alkylpolypropylenglycolpolyethylenglycol-Verbindungen der allgemeinen Formel (III-a)

R-O-A-B-H (III-a)

wobei R ein C1-C4-Fragment ist, bevorzugt ein C3-C4-Fragment, besonders bevorzugt ein C4-Fragment, ist,
A ist ein Polypropylenglycol-Fragment bestehend aus 10 bis 40 Propylenoxid- (PO-) Einheiten (Formel III-b), bevorzugt bestehend aus 15-35 PO-Einheiten, besonders bevorzugt bestehend aus 20-30 PO-Einheiten,
B ist ein randomerisiert copolymerisiertes Polyethylenglycol-Polypropylenglycol-Fragment bestehend aus 10-50 Ethylenoxid- (EO-) Einheiten (Formel III-c) zusammen mit 0-10 Propylenglycol- (PO-) Einheiten, bevorzugt bestehend aus 20-40 EO-Einheiten zusammen mit 0-8 PO-Einheiten, besonders bevorzugt bestehend aus 30-40 PO-Einheiten zusammen mit 0-5 PO-Einheiten.

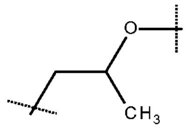

Formel III-b

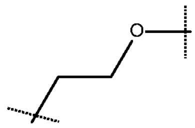

Formel III-c

Beispiele für "Alkylpolypropylenglycolpolyethylenglycol-Verbindungen" sind:

| Handelsname | Hersteller |
|---|---|
| Antarox B/848 | Solvay |
| Antarox BL-470 | Solvay |
| Antarox BL-480 | Solvay |
| Atlas G 5000 | Croda |
| Atlas G 5002 | Croda |
| Emulsogen 3510 | Clariant |
| Emulsogen EP 4901 | Clariant |
| Ethylan NS 500 K | Akzo Nobel |
| Ethylan NS 500 LQ | Akzo Nobel |
| Ethylan NS 505 K | Akzo Nobel |
| Lucramul AG 411 | Levaco |
| Synergen 848 | Clariant |
| Termul 5429 | Huntsman |
| Tergitol XD | Dow |
| Toximul 8320 | Stepan |
| Toximul 8325 | Stepan |
| Ultraric 5000 | Oxiteno |

und Verbindungen der allgemeinen Formel (IIId)

$$R\text{-}O\text{-}(C_mH_{2m}O)_x\text{-}(C_nH_{2n}O)_y\text{-}R' \qquad (IIId)$$

in welcher

R und R' unabhängig voneinander für Wasserstoff, einen linearen $C_1$- bis $C_5$-Alkylrest oder einen verzweigten $C_3$- oder $C_4$-Alkylrest stehen;
m gleich 2 oder 3 ist;
n gleich 2 oder 3 ist;
x gleich 5 bis 150 ist; und
y gleich 5 bis 150 ist,

wobei ein Rest n oder m die Bedeutung 2 und der andere Rest n oder m die Bedeutung 3 aufweist.

Unter einem linearen $C_1$- bis $C_5$-Alkylrest versteht man im Rahmen der vorliegenden Erfindung einen Methyl-, einen Ethyl-, einen n-Propyl-, einen n-Butyl oder einen n-Pentylrest.
Unter einem verzweigten $C_3$- oder $C_4$-Alkylrest versteht man im Rahmen der vorliegenden Erfindung einen

Isopropyl-, einen Isobutyl- oder einen Tertiärbutylrest.

In einer bevorzugten Ausführungsform werden die Reste R und R' unabhängig voneinander ausgewählt aus der Gruppe, bestehend aus einem Methylrest, einem n-Butylrest und Wasserstoff.

In einer noch bevorzugteren Ausführungsform werden die Reste R und R' unabhängig voneinander ausgewählt aus der Gruppe, bestehend aus einem n-Butylrest und Wasserstoff.

Im Hinblick auf die Anordnung der Polyethylen- und Polypropyleneinheiten kann

(a) entweder m den Wert 2 und n den Wert 3;

(b) oder m den Wert 3 und n den Wert 2

annehmen. Bevorzugt ist die Ausgestaltung (b) mit m gleich 3 und n gleich 2.

Ganz besonders bevorzugt sind Alkylpolypropylenglycolpolyethylenglycol-Verbindungen der Formel (IIId), in welcher

m 3 ist,
n 2 ist,
x für 5 bis 80 steht,
y für 5 bis 80 steht,
R n-Butyl oder Wasserstoff und
R' Wasserstoff ist.

e. Geeignete Tenside e) im Sinne der vorliegenden Erfindung sind ausgewählt aus der Gruppe umfassend:

e1) Tenside vom Polycarboxylat-Typ, beispielsweise solche wie hydrophob modifizierte Kammähnliche Polymere, wie z.B. Polyacrylsäure, Polymethacrylsäure, Polymaleinsäure, Polymaleinanhydrid, ein Copolymer von Maleinsäure oder Maleinanhydrid mit einem Olefin (wie Isobutylen oder Diisobutylen), ein Copolymer von Acrylsäure und Itaconsäure, ein Copolymer von Methacrylsäure und Itaconsäure, ein Copolymer von Maleinsäure oder Maleinanhydrid und Styrol, ein Copolymer von Acrylsäure und Methacrylsäure, ein Copolymer von Acrylsäure und Methacrylat, ein Copolymer von Acrylsäure und Vinylacetat, ein Copolymer von Styrol und Methacrylsäure, modifizierte Copolymere von Styrol und Methacrylsäure, ein Copolymer von Maleinsäure oder Maleinanhydrid und Acrylsäure, eine N-methyl-Fettsäure (z.B. $C_8$-$C_{18}$)-sarcosinat, eine Carbonsäure wie eine Harzsäure oder eine Fettsäure (z.B. $C_8$-$C_{18}$) oder ein Salz einer solchen Carbonsäure. Die oben genannte Copolymere können auch in Form ihrer Salze vorliegen, z.B. Alkalimetallsalze (vorzugsweise Li, Na, K), Erdalkalimetallsalze (vorzugsweise Ca, Mg), Ammonium oder verschiedene Amine. Beispielhaft für die zuvor beschriebenen seien genannt Geropon T/36, Geropon TA/72, Tersperse 2700, Atlox Metasperse 550 S, Geropon Ultrasperse, Narlex D-72, Versa TL3 und Agrilan 789 Dry, sowie

e2) Tenside ausgewählt aus der Gruppe bestehend aus Salzen von sulfatierten Formaldehyd-Kondensationsprodukten mit Alkylaromaten, z.B. MORWET D-425 (Fa. Akzo Nobel); OPARYL DT 120, OPARYL DT 201, OPARYL DT 530 (Fa. Bozzetto); TERSPERSE 2020 (Fa. Huntsman) sowie Salze von sulfatierten Formaldehyd-Kondensationsprodukten mit Ditolylether (z.B. BAYKANOL SL, Fa. Levaco) und Salze von sulfatierten Formaldehyd-Kondensationsprodukten mit Cyclohexanon (z.B. LUCRAMUL DAC 210, Fa. Levaco), sowie

e3) Tenside ausgewählt aus der Gruppe der Ligninsulfonate und deren Salzen, vorzugsweise ausgewählt aus der Gruppe der Ligninsulfonate und deren Salzen, bestehend aus Borresperse NA, Borresperse 3A, Ultrazine NA, Ufoxane 3A. Vanisperse CB, Marasperse AG, MARASPERSE N 22, MARASPERSE C 21, MARASPERSE CBOS-4, WAFEX CA122 und Borresperse CA der Fa. Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O und POLYFON T der Fa. Ingevity; AGRINOL DN 19 und Agrinol C12 der Fa. Tembec.

Weiter bevorzugt sind Tenside ausgewählt aus der Gruppe, die die Tenside e1) und e2) umfasst.

Besonders bevorzugt sind Tenside ausgewählt aus der Gruppe, die die Tenside e1) umfaßt.

Ganz besonders bevorzugt sind Tenside aus der Gruppe e1) umfassend Natriumsalze der Copolymere von Maleinsäure und Olefinen (z.B. Geropon T/36 / Solvay; Duramax D-305 / Dow); und Natriumsalze von Copolymeren von Methacrylsäure und Styrol (Tersperse 2700 / Huntsman; Atlox Metasperse 500S / Croda); insbesondere Natriumsalze der Copolymere von Maleinsäure und Olefinen (z.B. Geropon T/36).

Geeignete Tenside wie Tersperse 2700 sind auch in der WO 2008036865 A2 beschrieben.

Die oben beschriebenen Tenside können sowohl einzeln oder in Kombination verwendet werden, wobei Kombinationen der Tenside ausgewählt aus der Gruppe der Natriumsalze der Copolymere von Maleinsäure und Olefinen mit Salzen von sulfatierten Formaldehyd- Kondensationsprodukten mit Alkylaromaten und Ligninsulfonate und deren Salzen bevorzugt sind.

f. Wasserunlöslicher Füllstoff

Geeignete Füllstoffe sind vorzugsweise aus gewählt aus der Gruppe, die

f1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (BASF), Agsorb® (Oil-Dri Corporation), Pangel B (Tolsa) oder Hectorite® (Akzo Nobel),

f2) synthetische Silikate und pyrogene Kieselsäuren, wie Silikate der Sipernat®-, Aerosil®- oder Durosil®-Reihe (Degussa), der CAB-O-SIL®-Reihe (Cabot) oder der Van Gel-Reihe (R.T. Vanderbilt), und

f3) Füllstoffe auf Basis synthetischer Polymere, wie Verdicker der Thixin®- oder Thixatrol®-Reihe (Elementis)

umfaßt.

Weiter bevorzugt sind Füllstoffe der Gruppe f2.

Besonders bevorzugt sind pyrogene Kieselsäuren als Füllstoff f), wie Aerosil-Typen, Aerosil R-Typen und Cab-O-Sil-Typen sowie Attapulgite, allein und in Mischungen.

g. Lösungsmittel

Das Lösungsmittel g) ist ausgewählt aus der Gruppe bestehend aus Dimethylcarbonat, Diethylcarbonat, Dipropylcarbonat, Diisopropylcarbonat, Dibutylcarbonat und dessen Isomere, Diphenylcarbonat, Ethylencarbonat, Trimethylencarbonat, Propylencarbonat, Butylencarbonat, Pentylencarbonat, Hexylencarbonat und Octylencarbonat.

Besonders bevorzugt ist g) Propylencarbonat.

h. weitere Adjuvantien

Die erfindungsgemäßen Zusammensetzungen enthalten gegebenenfalls weitere Adjuvantien h), z.B. gegebenenfalls Stoffe aus den Gruppen der Emulgiermittel, der Feuchthaltemittel (sog. humectants), der schaumhemmenden Mittel, der Konservierungsmittel, der Farbstoffe, Stabilisatoren und der Antioxydantien.

Als Emulgatoren kommen alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid und/oder Butylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkyl-ammoniumhalogenide, Trialkylarylammoniumhalogenide, Alkylamin-sulfonate, Endgruppen-verschlossene und nicht Endgruppen-verschlossene alkoxylierte lineare und verzweigte, gesättigte und ungesättigte Alkohole (z.B. Butoxypolyethylenpropylenglycole), und Polyethylenglykole und Polypropylenglykole.

Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C6-C20-Alkoholen mit Ethylenoxid im Molverhältnis 1:5 bis 1:50, Umsetzungsprodukte von C6-C20-Alkoholen mit Propylenoxid und Ethylenoxid im Molverhältnis 1:1:1 bis 1:5:10, Umsetzungsprodukte von Fettaminen mit Ethylenoxid im Molverhältnis 1:2 bis 1:25, Umsetzungsprodukte von 1 Mol Phenol mit 2 bis 3 Mol Styrol und 10 bis 50 Mol Ethylenoxid, Umsetzungsprodukte von C8-C12-Alkylphenolen, mit Ethylenoxid im Molverhältnis 1:5 bis 1:30, Alkylglykoside, C8-C16-Alkylbenzolsulfonsäuresalze, wie z.B. Calcium-, Monoethanolammonium-, Diethanolammonium- und Triethanolammonium-Salze.

Als Feuchthaltemittel (Humectants) kommen alle üblicherweise für diesen Zweck in agrochemischen Mitteln einsetzbaren Substanzen in Betracht. Bevorzugt sind wasserlösliche Flüssigkeiten, und beispielhaft genannt seien Glycerin.

Als schaumhemmende Stoffe kommen alle üblicherweise für diesen Zweck in agrochemischen Mitteln einsetzbaren Substanzen in Betracht. Bevorzugt sind Silikonöle, z.B. SAG1572, und Magnesiumstearat.

Als Antioxidantien kommen alle üblicherweise für diesen Zweck in agrochemischen Mitteln einsetzbaren Substanzen in Betracht. Bevorzugt ist Butylhydroxytoluol.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als mögliche Stabilisatoren können beispielsweise Säuren oder Basen eingesetzt werden. Beispielhaft für Säuren seien Zitronensäure, Ameisensäure, Essigsäure oder Borsäure genannt. Beispielhaft für Basen seien Natriumsalze von Carbonsäuren sowie ein-oder mehrfach alkyl-substituierte Amine genannt.

In einer bevorzugten Ausführungsform ist der Gegenstand der Erfindung eine insektizide Zusammensetzung enthaltend:

a. eine Verbindung der Formel (I-2)

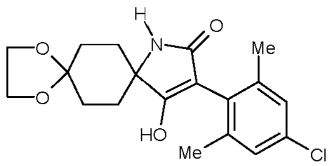
(I-2),

b. Flupyradifuron,

c. mindestens ein Ammoniumsalz ausgewählt aus der Gruppe bestehend aus Ammoniumsulfat (AMS) und Diammoniumhydrogenphosphat (DAHP),

d. mindestens ein Dispergiermittel, ausgewählt aus der Gruppe bestehend aus Alkylpolypropylenglycolpolyethylenglycol-Verbindungen der allgemeinen Formel (III-a)

R-O-A-B-H **(III-a)**

wobei R ein C1-C4-Fragment ist, bevorzugt ein C3-C4-Fragment, besonders bevorzugt ein C4-Fragment,
A ein Polypropylenglycol-Fragment bestehend aus 10 bis 40 Propylenoxid- (PO-) Einheiten (Formel III-b), bevorzugt bestehend aus 15-35 PO-Einheiten, besonders bevorzugt bestehend aus 20-30 PO-Einheiten, ist,
B ein randomerisiert copolymerisiertes Polyethylenglycol-Polypropylenglycol-Fragment bestehend aus 10-50 Ethylenoxid- (EO-) Einheiten (Formel III-c) zusammen mit 0-10 Propylenglycol- (PO-) Einheiten, bevorzugt bestehend aus 20-40 EO-Einheiten zusammen mit 0-8 PO-Einheiten, besonders bevorzugt bestehend aus 30-40 PO-Einheiten zusammen mit 0-5 PO-Einheiten, ist.

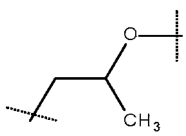
**Formel III-b**

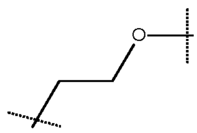
**Formel III-c**

und Alkylpolypropylenglycolpolyethylenglycol-Verbindungen der allgemeinen Formel (IIId),

$$R\text{-}O\text{-}(C_mH_{2m}O)_x\text{-}(C_nH_{2n}O)_y\text{-}R' \qquad \text{(IIId)}$$

in welchen die einzelnen Reste und Indizes die folgenden Bedeutungen aufweisen:

R und R' unabhängig voneinander für Wasserstoff, einen linearen $C_1$- bis $C_5$-Alkylrest oder einen verzweigten $C_3$- oder $C_4$-Alkylrest stehen;
m gleich 2 oder 3 ist;
n gleich 2 oder 3 ist;
x gleich 5 bis 150 ist; und
y gleich 5 bis 150 ist,
wobei ein Rest n oder m die Bedeutung 2 und der andere Rest n oder m die Bedeutung 3 aufweist,

e. mindestens ein Tensid ausgewählt aus der Gruppe umfassend Polycarboxylat-Typen,

f. mindestens einen Füllstoff, ausgewählt aus der Gruppe bestehend aus den pyrogenen Kieselsäuren und Attapulgiten.

g. Propylencarbonat,

h. optional weitere Adjuvantien.

Die Verbindung I-2 wird bevorzugt in Form ihrer thermodynamisch stabilsten polymorphen Struktur eingesetzt.

Prozentzahlen sind - wenn nicht anders angegeben - als Gewichtsprozente zu verstehen, wobei sich die Gew-% der Zusammensetzungen zu 100 addieren.

Die Nachfolgenden Anteile der einzelnen Komponenten sind jeweils bezogen auf das Gesamtgewicht der Zusammensetzung, wobei der fehlende Anteil zu 1 Liter Gesamtzusammensetzung durch die Komponente h) (Lösungsmittel) aufgefüllt wird. Der Anteil an Komponente h) beträgt somit vorzugsweise von 1 bis 80 Gew.-%, weiter bevorzugt von 20 - 60 Gew.-%.

Der Anteil des festen Wirkstoffs (Komponente a) in den erfindungsgemäßen Zusammensetzungen beträgt

vorzugsweise 0,5 - 30 Gew.-%,

weiter bevorzugt 1 - 20 Gew.-%, und

besonders bevorzugt 1 - 15 Gew.-%.

Der Anteil des gelösten Wirkstoffs (Komponente b) in den erfindungsgemäßen Zusammensetzungen beträgt

vorzugsweise 1 - 30 Gew.-%,

weiter bevorzugt 2 - 20 Gew.-%, und

besonders bevorzugt 2 - 15 Gew.-% betragen.

Der Anteil des Ammoniumsalzes (Komponente c) in den erfindungsgemäßen Zusammensetzungen beträgt

vorzugsweise 1 - 40 Gew.-%,

weiter bevorzugt 5 - 35 Gew.-%, und

besonders bevorzugt 15 - 30 Gew.-% betragen.

Der Anteil des Dispergiermittels (Komponente d) in den erfindungsgemäßen Zusammensetzungen beträgt

vorzugsweise 0,5 - 40 Gew.-%,
weiter bevorzugt 2,5 - 35 Gew.-%, und
besonders bevorzugt 5 - 30 Gew.-% betragen.

Der Anteil des Tensids (Komponente e) in den erfindungsgemäßen Zusammensetzungen beträgt

vorzugsweise 0,3 - 8 Gew.-%, und
besonders bevorzugt 0,5 - 2,5 Gew.-%.

Der Anteil des Füllstoffs (Komponente f) in den Zusammensetzungen beträgt

vorzugsweise 0,1 - 10 Gew.-%,
weiter bevorzugt 0,5 - 10 Gew.-%, und
besonders bevorzugt 2 - 10 Gew.-% betragen.

Der Anteil der weiteren Adjuvantien (Komponente h) - sofern enthalten - in den erfindungsgemäßen Zusammensetzungen beträgt

vorzugsweise 0 - 10 Gew.-%,
weiter bevorzugt 0,01 - 8 Gew.-%, und
besonders bevorzugt 0,05 - 6 Gew.-% betragen.

Eine bevorzugte Ausführungsform der Erfindung sind Zusammensetzungen enthaltend Komponenten

a) 2-20 Gew.-%
b) 2-20 Gew.-%
c) 5-35 Gew.-%
d) 5-35 Gew.-%
e) 0,3-8 Gew.-%.
f) 0,5-12,5 Gew.-%.
h) 0,01-8 Gew.-%.
g) zu einem Liter

Eine weiter bevorzugte Ausführungsform der Erfindung sind Zusammensetzungen enthaltend Komponenten

a) 2-15 Gew.-%
b) 2-15 Gew.-%
c) 15-30 Gew.-%
d) 10-30 Gew.-%
e) 0,5-2,5 Gew.-%.
f) 1-10 Gew.-%.
h) 0,05-6 Gew.-%.
g) zu einem Liter

Die Aufwandmenge an den erfindungsgemäßen Formulierungen kann innerhalb eines größeren Bereiches variiert werden. Sie richtet sich nach den jeweiligen Wirkstoffen und nach deren Gehalt in den Zusammensetzungen.

Mit Hilfe der erfindungsgemäßen Zusammensetzungen lassen sich die insektiziden Wirkstoffmischungen in besonders vorteilhafter Weise auf Pflanzen und/oder deren Lebensraum ausbringen.

Mit den erfindungsgemäßen Zusammensetzungen können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Bevorzugt werden die erfindungsgemäßen Formulierungen durch Spritzapplikation gegen tierische Schädlinge aus den folgenden Schädlingsfamilien eingesetzt:
Bevorzugt sind aus der Familie der Blasenläuse (Pemphigidae): Eriosoma spp., Pemphigus spp., in Kulturen wie z.B. Zitrus, Kernobst, Steinobst, Blattgemüse, Wurzel- und Knollengemüse und Zierpflanzen.

Bevorzugt sind aus der Familie der Wurzelläuse (Phylloxeridae): Phylloxera spp. in Wein, Nüssen, Zitrus.

Bevorzugt sind aus der Familie der Blattflöhe (Psyllidae): Psylla spp., Paratrioza spp., Tenalaphara spp., Diaphorina spp., Trioza spp., in Kulturen wie z.B. Kernobst, Steinobst, Zitrus, Gemüse, Kartoffeln, in tropischen Kulturen.

Bevorzugt sind aus der Familie der Napfschildläuse (Coccidae): Ceroplastes spp., Drosicha spp. Pulvinaria spp., Protopulminaria spp., Saissetia spp., Coccus spp., in mehrjährigen Kulturen wie z.B. Zitrus, Kernobst, Steinobst, Oliven, Wein, Kaffee, Tee, tropischen Kulturen, Zierpflanzen, Gemüse.

Bevorzugt sind aus der Familie der Deckelschildläuse (Diaspididae): Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in Kulturen wie z.B. Zitrus, Kernobst, Steinobst, Mandeln, Pistazien, Nüssen, Oliven, Tee, Zierpflanzen, Wein, tropischen Kulturen.

Bevorzugt sind aus der Familie der Röhrenschildläuse (Ortheziidae): Orthezia spp. in Zitrus, Kernobst, Steinobst.

Bevorzugt sind aus der Familie der Schmier- und Wollläuse (Pseudococcidae): Pericerga, Pseudococcus spp., Planococcus spp., Dysmicoccus spp., in Kulturen wie z.B. Zitrus, Stein- und Kernobst, Tee, Wein, Gemüse, Zierpflanzen und tropischen Kulturen.

Weiterhin bevorzugt sind aus der Familie der Mottenschildläuse (Aleyrodidae): Bemisia tabaci, Bemisia argentifolii, Trialeurodes vaporariorum, Aleurothrixus floccosus, Aleurodes spp., Dialeurodes spp., Parabemisia myricae in Kulturen wie z.B. Gemüse, Melonen, Kartoffeln, Tabak, Beerenfrüchten, Zitrus, Zierpflanzen, Baumwolle, Soja und tropischen Kulturen.

Außerdem bevorzugt sind aus der Familie der Röhrenläuse (Aphidae):

Myzus spp. in Tabak, Steinobst, Beerenfrüchten, Fruchtgemüse, Blattgemüse, Knollen- und Wurzelgemüse, Melonen, Kartoffeln, Zierpflanzen, Gewürze,

Acyrthosiphon onobrychis in Gemüse,

Aphis spp. in Tabak, Zitrus, Kernobst, Steinobst, Melonen, Erdbeeren, Beerenfrüchten, Fruchtgemüse, Blattgemüse, Knollen-, Stangen- und Wurzelgemüse, Zierpflanzen, Kartoffeln, Kürbisse, Gewürze,

Rhodobium porosum in Erdbeeren,

Nasonovia ribisnigri in Blattgemüse,

Macrosiphum spp. in Zierpflanzen, Kartoffeln, Blatt-, und Fruchtgemüse, Erdbeeren,

Phorodon humuli in Hopfen,

Brevicoryne brassicae in Blattgemüse,

Toxoptera spp.in Zitrus, Steinobst, Mandeln, Nüssen, Gewürzen,

Aulacorthum spp. in Zitrus, Kartoffeln, Frucht- und Blattgemüse,

Anuraphis cardui in Gemüse,

Brachycaudus helycrisii in Sonnenblumen,

Acyrthosiphon onobrychis in Gemüse.

Bevorzugt sind ebenfalls aus der Familie der Thripse (Thripidae): Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. und Thrips spp., in Kulturen wie z.B. Obst, Baumwolle, Wein, Tee, Nüsse, tropischen Kulturen, Zierpflanzen, Coniferen, Tabak, Gewürze, Gemüse, Beerenfrüchte, Melonen, Zitrus und Kartoffeln.

Bevorzugt sind außerdem aus den Familien der Minierfliegen (Agromyzidae) und Blumenfliegen (Anthomyiidae): Agromyza spp., Amauromyza spp., Atherigona spp., Chlorops spp., Liriomyza spp., Oscinella spp., Pegomyia spp. in Kulturen wie z.B. Gemüse, Melonen, Kartoffeln, Nüsse, Zierpflanzen.

Bevorzugt sind aus den Familien der Zwergzikaden (Cicadellidae) und Hornzikaden (Delphacidae); Circulifer spp., Dalbus spp., Empoasca spp., Erythroneura spp., Homalodisca spp., Iodioscopus spp., Laodelphax spp., Nephotettix spp., Nilaparvata spp., Oncometopia spp., Sogatella spp., in Kulturen wie z.B. Zitrus, Obst, Wein, Kartoffeln, Gemüse, Zierpflanzen, Coniferen, Melonen, Beerenfrüchte, Tee, Nüssen, Reis und tropischen Kulturen.

Bevorzugt sind aus der Familie der Miniermotten (Gracillariidae):
Caloptilia spp., Gracillaria spp., Lithocolletis spp., Leucoptera spp., Phtorimaea spp., Phyllocnistis spp. in Kulturen wie Kernobst, Steinobst, Wein, Nüsse, Zitrus, Koniferen, Kartoffeln, Kaffee.

Bevorzugt sind aus der Familie der Gallmücken (Cecodomyiidae):
Contarinia spp., Dasineura spp., Diplosis spp., Prodiplosis spp., Thecodiplosis spp., Sitodiplosis spp., Haplodiplosis spp. in Kulturen wie Zitrus, Kernobst, Steinobst, Gemüse, Kartoffeln, Gewürze, Beerenobst, Koniferen, Hopfen.

Ebenso bevorzugt sind aus der Familie der Fruchtfliegen (Tephritidae):
Anastrepha spp., Ceratitis spp., Dacus spp., Rhagoletis spp. in Kulturen wie Gemüse, Beerenfrüchte, Melonen, Kern- und Steinobst, Zierpflanzen, Kartoffeln, Wein, tropischen Kulturen, Zitrus, Oliven.

Außerdem bevorzugt sind Milben aus den Familien der Spinnmilben (Tetranychidae) und der Gallmilben

(Eriophydae):
Tetranychus spp., Panonychus spp., Aculops spp. in Kulturen wie Gemüse, Kartoffeln, Zierpflanzen, Zitrus, Wein, Koniferen.

Die erfindungsgemäße Behandlung der Pflanzen und Pflanzenteile mit den erfindungsgemäßen Zusammensetzungen erfolgt direkt oder durch Einwirkung auf deren Umgebung, Lebensraum oder Lagerraum nach den üblichen Behandlungsmethoden, z.B. durch Angießen (Drench), Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Vorzugsweise ist die zu behandelnde Pflanze ausgewählt aus der Gruppe bestehend aus Baumwolle, Sojabohne, Tabak, Gemüsen, Gewürzen, Zierpflanzen, Koniferen, Zitruspflanzen, Obst, tropischen Kulturen, Nüssen und Wein.

Vorzugsweise wirkt die erfindungsgemäße Zusammensetzung gegen Schädlinge aus den Familien der Blasenläuse, Wurzelläuse, Blattflöhe, Napfschildläuse, Deckelschildläuse, Röhrenschildläuse, Schmierläuse, Wollläuse, Mottenschildläuse, Röhrenläuse, Thripse, Zwergzikaden, Hornzikaden, Minierfliegen, Gallmücken, Fruchtfliegen, Miniermotten, Spinnmilben, Gallmilben.

Es wurde außerdem gefunden, dass sich die erfindungsgemäßen Zusammensetzungen herstellen lassen, durch ein Verfahren mit den Schritten:

1) Mischen der Inhaltsstoffe (a) bis (h) mit anschliessender Homogenisierung und Perlmahlung. Einschlägige Geräte für die Homogenisierung und Perlmahlung sind dem Fachmann bekannt.

Auch dieses Verfahren ist Gegenstand der Erfindung.

Schließlich wurde gefunden, dass sich die erfindungsgemäßen Zusammensetzungen sehr gut zur Applikation der enthaltenen agrochemischen Wirkstoffe auf Pflanzen und/oder deren Lebensraum eignen. Auch dieses Verfahren ist Gegenstand der Erfindung. Die folgenden Beispiele illustrieren den Gegenstand der Erfindung ohne ihn zu limitieren.

In den **Beispielen** verwendete Materialien:

| Handelsname | CAS-Nr. | Hersteller / Lieferant | Chemische Bezeichnung |
|---|---|---|---|
| Geropon T/36 | 37199-81-8 | Solvay | Maleinsäureanhydrid 2,4,4-trimethylpenten-polymer Natriumsalz |
| Borresperse NA | 8061-51-6 | Borregard | Lignosulfonsäure, Natriumsalz |
| Soprophor 3D33 | 90093-37-1 | Solvay | 2,4,6-Tris(1-phenylethyl)phenol polyoxyethylenated-(16EO)-phosphate |
| Soprophor FLK | 99734-09-5 | Solvay | 2,4,6-Tris(1-phenylethyl)phenol polyoxyethylenated-(16EO)-phosphate Kaliumsalz |
| Rhodacal 60 BE | 26264-06-2 | Solvay | Calcium-Dodecylbenzolsulphonat 60% in 2-Ethylhexanol |
| Synperonic A7 | 68131-39-5 | Croda | Alkohole, C12-15, ethoxyliert, 7EO |
| Rhodafac MB | 9046-01-9 | Solvay | Tridecylalkohol-ethoxylat-phosphat 3EO |
| Agnique PG8107 | 68515-73-1 | BASF | C8-C10 Alkylpolyglycosid D.P.1.7, wäßrige Lösung |
| SAG 1572 | 63148-62-9 | Momentive | Dimethylsiloxane and Silicone |
| Antarox B/848 | 9038-95-3 | Solvay | Alkylpropoxylat-ethoxylate MW 2600, 48% EO |
| Propylencarbonat | 108-32-7 | various | 4-Methyl-13-dioxolan-2-on |
| Lucramul HOT 5902 | 64366-70-7 | Levaco | 2-Ethylhexanol-propylenethylenglycolether |
| Attagel 50 | 12174-11-7 | BASF | Attapulgite Clay |
| Aerosil 200 | 112945-52-5 | Evonik | pyrogene amorphe Kieselsäure (fumed amorphous Silica) |

(fortgesetzt)

| Handelsname | CAS-Nr. | Hersteller / Lieferant | Chemische Bezeichnung |
|---|---|---|---|
| Aerosil R812S | 68909-20-6 | Evonik | teilhydrophobierte pyrogene amorphe Kieselsäure (partially hydrophobized fumed amorphous Silica) |
| Morwet D-425 | 68425-94-5 | Akzo Nobel | kondensiertes Naphthalen-formaldehydesulfonat, Natriumsalz |
| Bentone EW | 68953-58-2 | Elementis | modifizierter Bentonit |
| Diammoniumhydrogenphosphat (DAHP) | | verschiedene | $(NH4)2HPO4$ |
| Ammoniumsulfat (AMS) | | verschiedene | $(NH4)2SO4$ |

**Beispiel I** (nicht erfindungsgemäss)

In einer 25 mL PE-Schraubdeckelflasche werden alle Rezepturbestandteile gemäß den in Tabelle Ia-c beschriebenen Versuchen zusammengegeben und 10g Glasperlen (Größe 1-1,25 mm) hinzugefügt. Die Flasche wird verschlossen, in eine Schwingapparatur eingespannt (Retsch MM301) und 40 Minuten bei 30Hz behandelt; dabei erwärmen sich die Proben. Nach Ablauf der Zeit wurden die Proben auf Raumtemperatur abgekühlt und die Konsistenz der Formulierung beurteilt. Anschließend wurde mittels eines Mikroskops (Zeiss Durchlichtmikroskop, Vergrößerung 40-fach) die Partikelgröße bestimmt sowie die Dispersion auf ihre Eigenschaften hin überprüft. Eine möglichst kleine Partikelgröße weist dabei auf eine gute Mahlbarkeit hin während die Anwesenheit von Agglomeraten ein Zeichen für schlechtes Dispergierverhalten ist.

**Tabelle Ia** (Angaben in Gew.-%)

| Beispiel Nr. | I-1 | I-2 | I-3 | I-4 | I-5* | I-6* | I-7* | I-8* |
|---|---|---|---|---|---|---|---|---|
| FLUPYRADIFURONE | 8,55 | 8,55 | 8,55 | 8,55 | 8,55 | 8,55 | 8,55 | 8,55 |
| SAG 1572 | 0,01 | 0,01 | 0,01 | 0,01 | 0,01 | 0,01 | 0,01 | 0,01 |
| DAHP [% w/w] | 20 | | 20 | | 20 | | 20 | |
| AMS [% w/w] | | 20 | | 20 | | 20 | | 20 |
| Lucramul HOT 5902 | | | 20 | 20 | | | | |
| Antarox B/848 | | | | | 20 | 20 | 20 | 20 |
| Geropon T36 | | | | | | | 1 | 1 |
| Soprophor 3D33 | | | | | | | | |
| Soprophor FLK | | | | | | | | |
| Borresperse NA | | | | | | | | |
| Emulsogen EL 400 | | | | | | | | |
| Morwet D-425 | | | | | | | | |
| Aerosil 200 | | | | | | | | |
| Rhodacal 60 BE | | | | | | | | |
| Synperonic A7 | | | | | | | | |
| Agnique PG8107 | | | | | | | | |
| Propylene Carbonate | 71,44 | 71,44 | 51,44 | 51,44 | 51,44 | 51,44 | 50,44 | 50,44 |
| Konzentrat | flüssig | flüssig | flüssig | flüssig | flüssig | flüssig | flüssig | flüssig |
| Partikelgröße [μm] | 10 | 5 | 5 | 5 | 5 | <5 | 5 | 5 |
| Agglomerate [ja/nein] | ja | ja | ja | ja | vereinzelt | vereinzelt | nein | nein |

Die Beispiele I-1 bis 1-8 sind nicht erfindungsgemäss, da sie keinen Wirkstoff der Formel I enthalten.

**Tabelle Ib** (Angaben in Gew.-%)

| Beispiel Nr. | I-9* | I-10* | I-11 | I-12* | I-13* | I-14 | I-15 | I-16* |
|---|---|---|---|---|---|---|---|---|
| FLUPYRADIFURONE | 8,55 | 8,55 | 8,55 | 8,55 | 8,55 | 8,55 | 8,55 | 8,55 |
| SAG 1572 | 0,01 | 0,01 | 0,01 | 0,01 | 0,01 | 0,01 | 0,01 | 0,01 |
| DAHP [% w/w] | 20 | | 20 | | 20 | | 20 | 20 |
| AMS [% w/w] | | 20 | | 20 | | 20 | | |
| Lucramul HOT 5902 | | | | | | | | |
| Antarox B/848 | 20 | 20 | 20 | 20 | 20 | 20 | 20 | 20 |
| Geropon T36 | 5 | 5 | | | | | | |
| Soprophor 3D33 | | | 5 | 5 | | | | |
| Soprophor FLK | | | | | 5 | 5 | | |
| Borresperse NA | | | | | | | | |
| Emulsogen EL 400 | | | | | | | 3 | |
| Morwet D-425 | | | | | | | | 3 |
| Aerosil 200 | | | | | | | 2 | 2 |
| Rhodacal 60 BE | | | | | | | | |
| Synperonic A7 | | | | | | | | |
| Agnique PG8107 | | | | | | | | |
| Propylene Carbonate | 46,44 | 46,44 | 46,44 | 46,44 | 46,44 | 46,44 | 46,44 | 46,44 |
| Konzentrat | flüssig | flüssig | flüssig | flüssig | flüssig | flüssig | flüssig | flüssig |
| Partikelgröße [$\mu$m] | 5 | 10 | 5 | 5 | 5 | 10 | 10 | 20 |
| Agglomerate [ja/nein] | nein | vereinzelt | ja | nein | nein | ja | ja | nein |

Die Beispiele I-9 bis 1-16 sind nicht erfindungsgemäss, da sie keinen Wirkstoff der Formel I enthalten.

**Tabelle Ic** (Angaben in Gew.-%)

| Beispiel Nr. | I-17 | I-18 | I-19 | I-20 | I-21 | I-22 | I-23 | I-24 |
|---|---|---|---|---|---|---|---|---|
| FLUPYRADIFURONE | 8,55 | 8,55 | 8,55 | 8,55 | 8,55 | 8,55 | 8,55 | 8,55 |
| SAG 1572 | 0,01 | 0,01 | 0,01 | 0,01 | 0,01 | 0,01 | 0,01 | 0,01 |
| DAHP [% w/w] | 20 | | 20 | | 20 | | 20 | |
| AMS [% w/w] | | 20 | | 20 | | 20 | | 20 |
| Lucramul HOT 5902 | | | | | | | | |
| Antarox B/848 | 20 | 20 | 20 | 20 | 20 | 20 | 20 | 20 |
| Geropon T36 | | | | | | | | |
| Soprophor 3D33 | | | | | | | | |
| Soprophor FLK | | | | | | | | |
| Borresperse NA | 5 | 5 | | | | | | |
| Emulsogen EL 400 | | | | | | | | |
| Morwet D-425 | | | | | | | | |
| Aerosil 200 | | | | | | | | |
| Rhodacal 60 BE | | | 5 | 5 | | | | |

(fortgesetzt)

| Beispiel Nr. | I-17 | I-18 | I-19 | I-20 | I-21 | I-22 | I-23 | I-24 |
|---|---|---|---|---|---|---|---|---|
| Synperonic A7 | | | | | 5 | 5 | | |
| Agnique PG8107 | | | | | | | 5 | 5 |
| Propylene Carbonate | 46,44 | 46,44 | 46,44 | 46,44 | 46,44 | 46,44 | 46,44 | 46,44 |
| Konzentrat | flüssig | flüssig | flüssig | flüssig | flüssig | flüssig | dick | flüssig |
| Partikelgröße [μm] | 5 | 5 | 5 | 10 | 5 | 5 | 10 | 10 |
| Agglomerate [ja/nein] | ja | vereinzelt | ja | ja | ja | ja | ja | ja |

Die Beispiele I-17 bis I-24 sind nicht erfindungsgemäss, da sie keinen Wirkstoff der Formel I enthalten.

Auswertung der Versuche:

Die Zubereitungen auf Basis Flupyradifurone, Ammoniumsalz und Propylencarbonat ohne Beimischungen von Tensiden (Versuch I-1, I-2) zeigen eine grundsätzliche Mahlbarkeit der jeweiligen Ammoniumsalze unter den angegebenen Versuchsbedingungen, jedoch beobachtet man unter dem Mikroskop eine starke Agglomeration der Salzkristalle im Konzentrat, d.h. die einzelnen Partikel sind nicht oder sehr unzureichend in der flüssigen Phase dispergiert. Werden nun große Mengen eines Penetrationshilfmittels, z.B. Lucramul HOT 5902, zugegeben so bleibt das Dispergierverhalten im Vergleich zu den Versuchen ohne Penetrationshilfsmittel nahezu unverändert schlecht (Versuch I-3, I-4). Wird dagegen Lucramul HOT 5902 durch ein anderes Tensid wie beispielsweise Antarox B/848 in gleicher Menge ersetzt ist ebenfalls eine gute Mahlbarkeit der Ammoniumsalze gegeben (Versuch I-5, I-6), jedoch beobachtet man unter dem Mikroskop weniger und kleinere Agglomerate was auf eine deutliche Verbesserung bei der Dispersion der Salzkristalle hinweist. Durch Zugabe kleinerer Mengen bestimmter Dispergiermittel läßt sich die Dispersion von Salzkristallen in der flüssigen Phase noch weiter verbessern (Versuch I-7, I-8, I-9, I-10, I-16) so dass unter dem Mikroskop keine oder nahezu keine Agglomeration mehr zu beobachten ist. Dabei lassen sich je nach Dispergierhilfsmittel Unterschiede bei den eingesetzten Ammoniumsalzen erkennen (Versuch 1-11 versus I-12; Versuch 1-13 versus I-14). Wenn man hingegen kleine Mengen bestimmter anderer Hilfsstoffe beimengt kann in einigen Fällen kein verbesserter oder sogar auch ein gegenteiliger Effekt erzeugt werden (Versuche I-15 und I-17 bis 1-24). In dieses Fällen lassen sich unter dem Mikroskop mehr und stärkere Agglomerate beobachten als bei Proben die ausschließlich Antarox B/848 als Dispergiermittel enthalten (vgl. Versuch I-5 und I-6 versus Versuche 1-19 bis I-24), und auch die Konsistenz sowie die allgemeine Mahlbarkeit wird schlechter (Versuch I-20, I-23 und 1-24).

**Beispiel II** (nicht erfindungsgemäss)

Zum Zwecke der Prüfung der Mahlbarkeit und Dispergierbarkeit bestimmter fester Wirkstoffe wurden die Rezepturen so gewählt dass sie außer den entsprechenden Wirkstoffen keine anderen kristallinen Feststoffe (z.B. Ammoniumsalze) enthalten. In einer 25mL HDPE-Schraubdeckelflasche werden alle Rezepturbestandteile wie in Tabelle II zusammengegeben und mit 10 g Glasperlen (Größe 1-1,25 mm) versetzt. Die Flasche wird verschlossen, in eine Schwingapparatur eingespannt (Retsch MM301) und 40 Minuten bei 30Hz behandelt. Nach Ablauf der Zeit wurden die warmen Proben auf Raumtemperatur abgekühlt und die Konsistenz der Formulierung geprüft. Anschliessend wurden mittels eines Mikroskops (Zeiss Durchlichtmikroskop, Vergrößerung 40-fach) Partikelgröße und Dispersionseigenschaften ermittelt. Eine möglichst kleine Partikelgröße weist dabei auf eine gute Mahlbarkeit hin während die Anwesenheit von Agglomeraten ein Zeichen für schlechtes Dispergierverhalten ist.

**Tabelle II** (Angaben in Gew.-%)

| Beispiel Nr. | II-1 | II-2 | II-3 | II-4 | II-5 | II-6 | II-7 |
|---|---|---|---|---|---|---|---|
| FLUPYRADIFURONE | 8,55 | 8,55 | 8,55 | 8,55 | 8,55 | 8,55 | 8,55 |
| SAG 1572 | 0,01 | 0,01 | 0,01 | 0,01 | 0,01 | 0,01 | 0,01 |
| Antarox B/848 | 20,00 | 20,00 | 20,00 | 20,00 | 20,00 | 20,00 | 20,00 |
| Geropon T36 | 1,00 | 1,00 | 1,00 | 1,00 | 1,00 | 1,00 | 1,00 |
| I-2 | 4,00 | | | | | | |

(fortgesetzt)

| Beispiel Nr. | II-1 | II-2 | II-3 | II-4 | II-5 | II-6 | II-7 |
|---|---|---|---|---|---|---|---|
| Tetraniliprole | | 4,00 | | | | | |
| Spirotetramat | | | 4,00 | | | | |
| Thiacloprid | | | | 4,00 | | | |
| Fluopyram | | | | | 4,00 | | |
| Cyazypyr | | | | | | 4,00 | |
| Deltamethrin | | | | | | | 4,00 |
| Propylene Carbonate | 66,44 | 66,44 | 66,44 | 66,44 | 66,44 | 66,44 | 66,44 |
| Konzentrat | flüssig | flüssig | flüssig | flüssig | flüssig | flüssig | flüssig |
| Partikelgröße[μm] | 10 | 10 | 10 | 10 | 10 | 10 (100) | 10 |
| Agglomerate [ja/nein] | nein | nein | nein | nein | nein | nein | nein |

Die Beispiele II-1 bis II-7 sind nicht erfindungsgemäss, da sie kein Ammoniumsalz enthalten.

Auswertung der Versuche:

In allen Beispielen (II-1 bis II-7) lässt sich zeigen dass die Kombination aus Antarox B/848 und Geropon T/36 als Dispergierhilfsmittel geeignet ist die verschiedenen festen Wirkstoffe in der erfindungsgemäßen Formulierung zu dispergieren ohne dass Agglomerate aus Wirkstoffpartikeln gebildet werden.

**Beispiel III**

Zum Zwecke der Prüfung geeigneter Verdicker in Gegenwart geeigneter Dispergierhilfsmittel werden alle Rezepturbestandteile wie in Tabelle III angegeben zusammengegeben und unter Rühren homogenisiert. Anschließend wird eine Perlmahlung durchgeführt (Dispermat SL50, 80% Perlen 2mm, 4000 rpm, 40 min Kreislaufmahlung) und die entstandende Formulierung analysiert. Anschließend wird ein Lagerversuch bei erhöhter Temperatur durchgeführt und anschließend qualitativ das Erscheinungsbild (z.B. Aussehen, Konsistenz, und Redispergierbarkeit) sowie quantitativ die Phasentrennung nach Lagerung beurteilt.

Die Phasentrennung wird direkt nach der Lagerung entweder als Sedimentanteil angegeben und aus dem Quozienten H1 [Höhe der Grenzschicht zwischen Sedimentphase und Überstand] geteilt durch H0 [Gesamtfüllhöhe der Probe] berechnet, oder, wie im vorliegenden Falle, als Überstandsanteil:

$$\text{Sedimentanteil} = (H1/H0) * 100\ [\%]\ \text{bzw.}$$

$$\text{Überstandsanteil} = 100 - \text{Sedimentanteil}\ [\%]$$

Die Redispergierbarkeit bzw. Rehomogenisierbarkeit der Probe wird qualitativ durch Schütteln der Proben mit anschliessender Betrachtung des Bodens des Probenbehälters ermittelt. Eine ausgeprägte Phasentrennung nach kurzer Lagerzeit weist auf eine begrenzte Lagerstabilität und auf eine starke Tendenz zur Bildung von nicht oder nur schwer dispergierbaren Sedimenten während der Lagerung hin.

Die Beurteilung des Erscheinungsbildes findet analog DIN 10964 "Sensorische Prüfverfahren, einfach beschreibende Prüfung" statt. Zu diesem Zweck werden die zu untersuchenden Proben visuell und bei Bedarf mittels Schütteln und Neigen auf Form, Aggregatzustand und Farbe sowie weitere Auffälligkeiten (insbesondere z.B. Verklumpungen, Verbackungen, Bodensatzbildung, Nachverdickung, Marmorierung des Sedimentes etc.) hin untersucht.

In den folgenden Tabellen sind die Beispielzusammensetzungen III-2, III-5, III-8, III-11 und III-14 erfindungsgemäss. Alle anderen Zusammensetzungen sind nicht erfindungsgemäss.

**Tabelle IIIa** (Angaben in g/L)

| Beispiel Nr. | **III-1*** | **III-2*** | **III-3** | **III-4*** | **III-5*** | **III-6** | **III-7*** |
|---|---|---|---|---|---|---|---|
| Flupyradifuron | 50 | 50 | 50 | 50 | 50 | 50 | 50 |
| I-2 | 12 | 12 | 12 | 12 | 12 | 12 | 12 |
| Antarox B/848 | 200 | 200 | 200 | 200 | 200 | 200 | 200 |
| DAHP | 250 | 250 | 250 | 250 | 250 | 250 | 250 |
| Geropon T36 | | 10 | | | 10 | | |
| Soprophor 3D33 | | | 10 | | | 10 | |
| Attagel 50 | 10 | 10 | 10 | | | | 5 |
| Aerosil 200 | | | | | | | 5 |
| Aerosil R812S | | | | 10 | 10 | 10 | |
| Bentone EW | | | | | | | |
| Propylencarbonat | auf Volumen | auf Volumen | auf Volumen | auf Volumen | auf Volumen | auf Volumen | auf Volumen |
| Überstand nach 4w TW [%] | 6 | 2 | 5 | 5 | 2 | 4 | 2 |
| Überstand nach 4w 54 [%] | 11 | 9 | 5 | 7 | 20 | 70 | 9 |
| Überstand nach 4w RT [%] | 4 | 2 | 5 | 9 | 2 | 6 | 2 |
| Charakterisierung des Sediments nach Lagerung 4wTW | Niedrig viskos | Niedrig viskos | Marmorierung | Hochviskos | niedrigviskos | klebriges Sediment am Gefäßboden | Hochviskos |
| Rehomogenisierbarkeit nach Lagerung 4wTW | gut | gut | gut | moderat | gut | schlecht | gut |
| Charakterisierung des Sediments nach Lagerung 4w54 | Niedrig viskos | kompaktiertes Sediment | Marmorierung | Hochviskos | kompaktiertes Sediment | klebriges Sediment am Gefäßboden | Hochviskos |
| Rehomogenisierbarkeit nach Lagerung 4w54 | gut | gut | moderat | moderat | gut | schlecht | gut |
| Charakterisierung des Sediments nach Lagerung 4wRT | Niedrig viskos | Niedrig viskos | Marmorierung | Hochviskos | Niedrig viskos | Niedrig viskos | Hochviskos |
| Rehomogenisierbarkeit | | gut | gut | moderat | gut | gut | gut |

**Tabelle IIIb** (Angaben in g/L)

| Beispiel Nr. | **III-8*** | **III-9** | **III-10*** | **III-11*** | **III-12** | **III-13*#** | **III-14*#** |
|---|---|---|---|---|---|---|---|
| Flupyradifuron | 50 | 50 | 50 | 50 | 50 | 75 | 75 |
| I-2 | 12 | 12 | 12 | 12 | 12 | 12 | 12 |
| Antarox B/848 | 200 | 200 | 200 | 200 | 200 | 200 | 200 |
| DAHP | 250 | 250 | 250 | 250 | 250 | 250 | 250 |
| Geropon T36 | 10 | | | 10 | | | 10 |
| Soprophor 3D33 | | 10 | | | 10 | | |
| Attagel 50 | 5 | 5 | | | | | |
| Aerosil 200 | 5 | 5 | 30 | 30 | 10 | | |
| Aerosil R812S | | | | | | | |
| Bentone EW | | | | | | 30 | 30 |
| Propylencarbonat | auf Volu- men | auf Volu- men | auf Volu- men | auf Volu- men | auf Volu- men | auf Volu- men | auf Volu- men |
| Überstand nach 4w TW [%] | 2 | 1 | 5 | 2 | 2 | 0 | 3 |
| Überstand nach 4w 54 [%] | 3 | 5 | 17 | 4 | 10 | 0 | 5 |
| Überstand nach 4w RT [%] | 2 | 2 | 9 | 2 | 10 | 0 | 1 |
| Charakterisierung des Sediments nach Lagerung 4wTW | unauffäll ig | klebriges Sediment am Gefäßbo den | Niedrig viskos | unauffäll ig | Niedrig viskos | Hochvisk os | Niedrig viskos |
| Rehomogenisierbarkeit nach Lagerung 4wTW | gut | moderat | gut | gut | moderat | moderat | gut |
| Charakterisierung des Sediments nach Lagerung 4w54 | nauffälli g | klebriges Sediment am Gefäßbo den | Niedrig viskos | unauffäll ig | klebriges Sediment am Gefäßbo den | Hochviskos | Niedrig viskos |
| Rehomogenisierbarkeit nach Lagerung 4w54 | gut | schlecht | gut | gut | schlecht | moderat | gut |
| Charakterisierung des Sediments nach Lagerung 4wRT | unauffäll ig | unauffäll ig | Niedrig viskos | unauffäll ig | Niedrig viskos | Hochvisk os | Niedrig viskos |
| Rehomogenisierbarkeit nach Lagerung 4wRT | gut | gut | gut | gut | gut | gut | gut |
| # Ergebnisse ermittelt nach 2 Wochen Lagerung | | | | | | | |

Auswertung der Versuche:

Ohne Verwendung von zusätzlichen Dispergierhilfsmitteln lassen sich unter Verwendung bestimmter unlöslicher Füllstoffe wie Attagel 50, Aerosil 200, Aerosil 812S oder Bentone EW sowie bestimmter Kombinationen derselben stabile Formulierungen mit unterschiedlich hohen Viskositäten herstellen (III-1 & III-10 niedrigviskos; III-4,III-7 & III-13 hochviskos). Diese weisen nach einer zwei- bzw. vierwöchigen Lagerung unter verschiedenen Bedingungen nur geringe Phasentrennung und z.T. gute Redispergierbarkeiten auf. Durch Verwendung zusätzlicher Dispergierhilfsmittel wie beispielsweise Geropon T/36 (III-2, III-5, III-8, III-11, III-14) werden durchgehend niedrigviskose Formulierungen erreicht deren Sedimentations- und Redispergierverhalten bei sonst gleichen Bedingungen mindestens gleichwertig oder sogar

besser sind. Die Verwendung beispielsweise von Soprophor 3D33 als zusätzlichem Dispergierhilfsmittel (III-3, III-6, III-9, III-12) führt dagegen zu Formulierungen mit z.T. unerwünschten Eigenschaften wie beispielsweise Marmorierung (III-3), klebrigen Sedimenten (III-6, III-9, III-12) oder extremer Phasentrennung (III-6).

## Beispiel IV

Zum Zwecke der Prüfung geeigneter Füllstoff-/Dispergiersystem-Kombinationen werden alle Rezepturbestandteile wie in Tabelle IV angegeben zusammengegeben und unter Rühren homogenisiert. Anschließend wird eine Perlmahlung durchgeführt (Dispermat SL50, 80% Perlen 2mm, 4000 rpm, 40 min Kreislaufmahlung) und die entstandende Formulierung analysiert. Anschließend wird ein Lagerversuch bei erhöhter Temperatur durchgeführt und im Folgenden Aussehen, Konsistenz und Phasentrennung nach Lagerung beurteilt sowie Viskosität (nach CIPAC MT192; "Viscosity of Liquids by rotational viscometry") und Dispersionsstabilität in 2%iger wäßriger Verdünnung bestimmt. Bei der qualitativen Bestimmung der Dispersionsstabilität wird der Zeitraum angegeben über den die wäßrige Dispersion einen gleich bleibenden und homogenen Eindruck macht.

In der folgenden Tabelle sind die Beispielzusammensetzungen IV-1 bis IV-5 und IV-8 erfindungsgemäss. Alle anderen Zusammensetzungen sind nicht erfindungsgemäss.

**Tabelle IV** (Angaben in g/L)

| | IV-1* | IV-2 | IV-3* | IV-4* | IV-5* | IV-6 | IV-7 | IV-8* |
|---|---|---|---|---|---|---|---|---|
| Flupyradifuron | 75 | 75 | 75 | 75 | 75 | 75 | 75 | 75 |
| I-2 | 12 | 12 | 12 | 12 | 12 | 12 | 12 | 12 |
| Antarox B/848 | 200 | 200 | 200 | 200 | 200 | 200 | 200 | 200 |
| DAHP | 250 | 250 | 250 | 250 | 250 | 250 | 250 | 250 |
| Geropon T/36 | 10 | 10 | 10 | 10 | 10 | | | |
| Soprophor FLK | | | | 10 | | | 10 | |
| Morwet D-425 | | | | | 10 | | | 10 |
| Aerosil 200 | 30 | 50 | 25 | 25 | 25 | 25 | 25 | 25 |
| Aerosil R812S | | | 50 | 50 | 50 | 50 | 50 | 50 |
| Propylencarbonat | auf Volumen | auf Volumen | auf Volumen | auf Volumen | auf Volumen | auf Volumen | auf Volumen | auf Volumen |
| Phasenüberstand nach 2w RT [%] | | 0 | 1 | 2 | 0 | 17 | 19 | 0 |
| Phasenüberstand nach 2w TW [%] | | | 1 | 2 | 0 | 12 | 16 | 0 |
| Phasenüberstand nach 2w54 [%] | | 2 | 7 | 20 | 0 | 46 | 37 | 1 |
| Phasenüberstand nach 2w-10 [%] | | 0 | | | | | | |
| Phasenüberstand nach 4wTW [%] | 2 | | | | | | | |
| Phasenüberstand nach 4w40 [%] | 1 | | | | | | | |
| Phasenüberstand nach 4w54 [%] | 4 | | | | | | | |
| Phasenüberstand nach 4wRT [%] | 1 | | | | | | | |
| Charakterisierung des Sediments nach Lagerung 2w-10 | | unauffällig | | | | | | |

(fortgesetzt)

| | IV-1* | IV-2 | IV-3* | IV-4* | IV-5* | IV-6 | IV-7 | IV-8* |
|---|---|---|---|---|---|---|---|---|
| Rehomogenisierbarkeit nach 2w-10 | | gut | | | | | | |
| Charakterisierung des Sediments nach Lagerung 2wRT | | unauffällig | Niedrig viskos | unauffällig | unauffällig | Niedrig viskos | starkes Sediment | unauffällig |
| Rehomogenisierbarkeit nach 2wRT | | gut | gut | gut | gut | gut | schlecht | gut |
| Charakterisierung des Sediments nach Lagerung 2wTW | | *Nicht geprüft* | Niedrig viskos | unauffällig | unauffällig | etwas Sediment | starkes Sediment | unauffällig |
| Rehomogenisierbarkeit nach 2wTW | | *Nicht geprüft* | gut | gut | gut | schlecht | schlecht | gut |
| Charakterisierung des Sediments nach Lagerung 2w54 | | fest | Niedrig viskos | unauffällig | unauffällig | starkes Sediment | starkes Sediment | unauffällig |
| Rehomogenisierbarkeit nach 2w54 | | schlecht | gut | gut | gut | schlecht | schlecht | gut |
| Charakterisierung des Sediments nach Lagerung 4wTW | unauffällig | | | | | | | |
| Rehomogenisierbarkeit nach 4wTW | gut | | | | | | | |
| Charakterisierung des Sediments nach Lagerung 4w40 | unauffällig | | | | | | | |
| Rehomogenisierbarkeit nach 4w40 | gut | | | | | | | |
| Charakterisierung des Sediments nach Lagerung 4w54 | unauffällig | | | | | | | |
| Rehomogenisierbarkeit nach 4w54 | gut | | | | | | | |
| Charakterisierung des Sediments nach Lagerung 4wRT | unauffällig | | | | | | | |
| Rehomogenisierbarkeit nach 4wRT | gut | | | | | | | |
| Dynamische Viskosität @ 7,5 1/s [mPa.s] | 72,0 | 143,0 | 207,0 | 205,0 | 541,0 | n/a | n/a | 490,0 |
| Dynamische Viskosität @ 100 1/s [mPa.s] | 70,0 | 133,0 | 181,0 | 180,0 | 296,0 | n/a | n/a | 289,0 |
| Dispersionsstabilität @ RT [min] | n/a | n/a | 10,0 | 30,0 | 30,0 | n/a | n/a | 10,0 |
| Dispersionsstabilität @ TW [min] | n/a | n/a | 10,0 | 30,0 | 30,0 | n/a | n/a | 10,0 |

(fortgesetzt)

| | IV-1* | IV-2 | IV-3* | IV-4* | IV-5* | IV-6 | IV-7 | IV-8* |
|---|---|---|---|---|---|---|---|---|
| Dispersionsstabilität @ 54° [min] | n/a | n/a | 10,0 | 60,0 | 60,0 | n/a | n/a | 10,0 |
| TW = Temperatur-Wechselbedingungen (cyclisches Temperaturprogramm von -10°C bis +30°C) | | | | | | | | |

Auswertung der Versuche:

Durch Verwendung unterschiedlicher Mengen an Aerosil 200 unter gleichzeitiger Verwendung von Geropon T/36 als Dispergierhilfsmittel lassen sich stabile Formulierungen mit geringer Viskosität herstellen (IV-1). Zwar führt die Verwendung größerer Mengen von Aerosil 200 (IV-2) zu einer Vergrößerung der Viskosität, allerdings verfestigt sich die Formulierung im Rahmen einer 54°-Lagerung für 2 Wochen. Durch Verwendung von Kombinationen aus Aerosil 200 und Aerosil R812S lassen sich hingegen höherviskose stabile Formulierungen herstellen (IV-3). Wird darüber hinaus eine Kombination aus Geropon T/36 und einem weiteren Dispergierhilfsmittel verwendet so lassen sich die Formuliereigenschaften weiter verbessern; so bleibt die Viskosität im Falle der Verwendung von Soprophor FLK nahezu unverändert (IV-4) während die Verwendung von Morwet D-425 (IV-5) zu einer Erhöhung der Viskosität führt. Bei Versuchen bei denen das Geropon T/36 weggelassen wird und kein oder lediglich ein anderes Dispergierhilfsmittel verwendet wird (IV-6 bis IV-8) zeigt sich das die Verwendung von Morwet D-425 allein bereits in einer hinreichend stabilen Formulierung resultiert.

Ein weiterer Faktor zur Ermittlung der Formulierstabilität ist die Dispersionsstabilität der Formulierung in wäßriger Verdünnung. Es zeigt sich dass insbesondere Kombinationen von Geropon T/36 mit einem weiteren Dispergierhilfsmittel wie beispielsweise Soprophor FLK oder Morwet D-425 zu einer besseren Dispersionsstabilität führen als bei Verwendung von nur einem einzigen oder gar keinem Dispergierhilfsmittel.

**Beispiel V** (nicht erfindungsgemäss)

Kutikelpenetration von Flupyradifuron und I-2 Versuchsdurchführung:

In diesem Test wird die Penetration von Wirkstoffen durch enzymatisch isolierte Kutikeln von Apfelbaumblättern gemessen.

Verwendet werden Blätter, die in voll entwickeltem Zustand von Apfelbäumen abgeschnitten werden und nach der Methode beschrieben bei Schönherr und Riederer isoliert (Schönherr, J., Riederer, M. (1986)). Es werden nur die von Spaltöffnungen und Haaren freien Kutikeln der Blattoberseiten weiter verwendet. Die so gewonnenen Kutikularmembranen werden für Membran-Transport-Untersuchungen in Diffusionszellen (=Transportkammern) aus Edelstahl eingelegt. Dazu werden die Kutikeln mit einer Pinzette mittig auf die mit Silikonfett bestrichenen Ränder der Diffusionszellen plaziert und mit einem ebenfalls gefetteten Ring verschlossen. Die Anordnung ist so gewählt, dass die morphologische Außenseite der Kutikeln nach außen, also zur Luft, gerichtet ist, während die ursprüngliche Innenseite dem Inneren der Diffusionszelle zugewandt ist. Die Diffusionszellen sind mit Wasser bzw. mit einem Gemisch aus Wasser und Lösungsmittel gefüllt und auf des physiologisch relevante pH von 5.5 gepuffert. Das Medium der Diffusionszellen soll das Apoplast, also das natürliche Aufnahmemdium im inneren des Blattes nachstellen. Diese Methode eignet sich gut für systematische und mechanistische Studien mit dem Ziel den Einfluss der Formulierungen, Adjuvantien und Lösemittel auf Penetration der Pflanzenschutzmittel zu verstehen.

Zur Bestimmung der Penetration werden jeweils 5 µl einer die Wirkstoffe Flupyradifurone und I-2 enthaltenden Spritzbrühe bestimmter Zusammensetzung (siehe Tabelle V)auf die Außenseite einer Kutikula appliziert. Die Wirkstoffkonzentration entspricht der praxisüblichen Feldapplikationsrate. Zur Herstellung der Spritzbrühen werden die jeweiligen Inhaltsstoffe in den angegebenen Verhältnissen in Leitungswasser zusammengegeben und durch Rühren homogenisiert.

Nach dem Auftragen der Spritzbrühen lässt man jeweils das Wasser verdunsten, dreht dann die Kammern um und stellt sie in thermostatisierte Wannen, wobei auf die Außenseite der Kutikula jeweils Luft einer definierten Luftfeuchte und Temperatur geblasen wird. Die einsetzende Penetration findet daher bei einer relativen Luftfeuchtigkeit von 56 % und einer eingestellten Temperatur von 25°C statt. In regelmäßigen Abständen werden mit einem Autosampler Proben entnommen und der Gehalt an penetriertem Wirkstoff mittels HPLC gemessen. Bei den angegebenen Zahlen handelt es sich um Durchschnittswerte von jeweils 5 bis 10 Einzelmessungen.

Tabelle V: Ergebnisse Penetrationstest

| # | Gehalt der wäßrigen Spritzbrühen [g/L] | | | | | Penetration nach 24h (in %) | |
|---|---|---|---|---|---|---|---|
| | Flupyradifurone | I-2 | Propylencarbonat | Antarox B/848 | Diammoniumhydrogenphosphat | Flupyradifurone | I-2 |
| 1 | 0,1 | 0,5 | | | | 5,1 | 0 |
| 2 | 0,1 | 0,5 | 4 | | | 4,6 | 0 |
| 3 | 0,1 | 0,5 | | | 1,67 | 29,2 | 11,9 |
| 4 | 0,1 | 0,5 | 4 | | | 24,9 | 10,1 |
| 5 | 0,1 | 0,5 | | 1,33 | | 73 | 28,6 |
| 6 | 0,1 | 0,5 | 4 | 1,33 | | 58,7 | 20,6 |
| 7 | 0,1 | 0,5 | | 1,33 | 1,67 | 82,8 | 90,1 |
| 8 | 0,1 | 0,5 | 4 | 1,33 | 1,67 | 82,5 | 94,6 |

Auswertung der Versuche:

Die beiden getesteten Aktivsubstanzen Flupyradifurone und I-2 allein zeigen keine oder kaum Kutikelpenetration sowohl bei der Anwendung ohne Zusatzstoffe als auch in Gegenwart von Propylencarbonat (Tabelle V, Eintrag 1,2). Die Anwendungen der Wirkstoffe in Gegenwart von Diammoniumhydrogenphosphat (DAHP) und insbesondere Antarox B/848 führen unabhängig voneinander zu einer Verbesserung der Kutikelpenetration für beide getesteten Wirkstoffe; hier scheint sich die Anwesenheit von Propylencarbonat sogar negativ auszuwirken (Tabelle V Eintrag 3-6). Sobald alle Komponenten in Kombination eingesetzt werden zeigt sich das maximale Penetrationspotential welches sich additiv aus den einzelnen Effekten ergibt für beide Wirkstoffe der Formulierung.

## Patentansprüche

**1.** Wasserfreie Zusammensetzung enthaltend:

a) mindestens einen bei Raumtemperatur festen Wirkstoff a) gemäß Formel I,

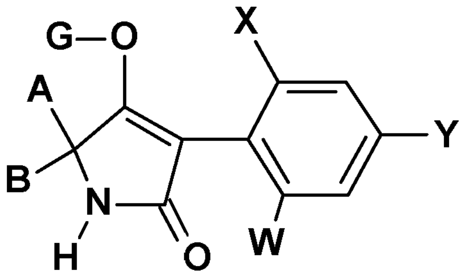

(I)

in welcher

W und Y unabhängig voneinander für Wasserstoff, C1-C4-Alkyl, Chlor, Brom, Jod oder Fluor stehen,
X für C1-C4-Alkyl, C1-C4-Alkoxy, Chlor, Brom oder Jod steht,
A, B und das Kohlenstoffatom, an das sie gebunden sind, für C3-C6-Cycloalkyl stehen, welches durch eine gegebenenfalls durch C1-C4-Alkyl oder $C_1$-$C_4$-Alkoxy-$C_1$-$C_2$-alkyl-substituierte Alkylendioxyl-Gruppe substituiert ist, die mit dem Kohlenstoffatom, an das sie gebunden ist, ein 5-Ring- oder 6-Ringketal bildet,
G für Wasserstoff (a) oder für eine der Gruppen

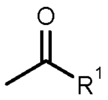 (b), 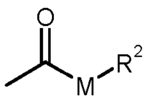 (c),

E (d)
steht,
in welchen

E für ein Metallion oder ein Ammoniumion steht,
M für Sauerstoff oder Schwefel steht,
R1 für geradkettiges oder verzweigtes C1-C6-Alkyl steht,
R2 für geradkettiges oder verzweigtes C1-C6-Alkyl steht,

b) mindestens einen in einem organischen Lösungsmittel löslichen Wirkstoff, verschieden von a), ausgewählt aus der Gruppe bestehend aus Imidacloprid, Clothianidin, Flupyradifurone und Acetamiprid,
c) mindestens ein Ammoniumsalz ausgewählt aus der Gruppe bestehend aus Ammoniumcarbonat, Ammoniumhydrogensulfat, Ammoniumsulfat (AMS), Ammoniumhydrogencarbonat und Diammoniumhydrogenphosphat (DAHP),
d) mindestens ein Dispergiermittel ausgewählt aus der Gruppe bestehend aus Alkylpolypropylenglycolpolyethylenglycol-Verbindungen der allgemeinen Formel (III-a),

R-O-A-B-H **(III-a)**

wobei R ein C1-C4-Fragment ist,
A ein Polypropylenglycol-Fragment bestehend aus 10 bis 40 Propylenoxid- (PO-) Einheiten (Formel III-b) ist,
B ein randomerisiert copolymerisiertes Polyethylenglycol-Polypropylenglycol-Fragment bestehend aus 10-50 Ethylenoxid- (EO-) Einheiten (Formel III-c) zusammen mit 0-10 Propylenglycol- (PO-) Einheiten ist,

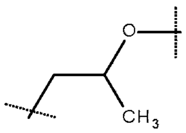

**Formel III-b**

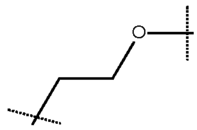

**Formel III-c**

und Alkylpolypropylenglycolpolyethylenglycol-Verbindungen der allgemeinen Formel (IIId)

$$R\text{-}O\text{-}(C_mH_{2m}O)_x\text{-}(C_nH_{2n}O)_y\text{-}R' \quad \text{(IIId)}$$

in welcher

R und R' unabhängig voneinander für Wasserstoff, einen linearen $C_1$- bis $C_5$-Alkylrest oder einen verzweigten $C_3$- oder $C_4$-Alkylrest stehen;
m gleich 2 oder 3 ist;
n gleich 2 oder 3 ist;
x gleich 5 bis 150 ist; und
y gleich 5 bis 150 ist,
wobei ein Rest n oder m die Bedeutung 2 und der andere Rest n oder m die Bedeutung 3 aufweist,

e) ein oder mehrere Tenside ausgewählt aus der Gruppe bestehend aus Polycarboxylat-Typen, Salzen von sulfatierten Formaldehyd-Kondensationsprodukten mit Alkylaromaten, Salzen von sulfatierten Formaldehyd-Kondensationsprodukten mit Ditolylether, Salzen von sulfatierten Formaldehyd-Kondensationsprodukten mit Cyclohexanon, und Ligninsulfonaten und deren Salzen,
f) mindestens einen wasserunlöslichen Füllstoff ausgewählt aus der Gruppe bestehend aus modifizierten natürlichen Silikaten, Silikatmineralien, synthetischen Silikaten und pyrogenen Kieselsäuren, Attapulgiten und Füllstoffen auf Basis synthetischer Polymere,
g) mindestens ein Lösungsmittel ausgewählt aus der Gruppe bestehend aus Dimethylcarbonat, Diethylcarbonat, Dipropylcarbonat, Diisopropylcarbonat, Dibutylcarbonat und dessen Isomere, Diphenylcarbonat, Ethylencarbonat, Trimethylencarbonat, Propylencarbonat, Butylencarbonat, Pentylencarbonat, Hexylencarbonat und Octylencarbonat,

wobei Wirkstoff a) im gewählten Lösungsmittel g) unlöslich oder nur wenig löslich ist.

**2.** Zusammensetzung nach Anspruch 1, weiterhin enthaltend
h) weitere Adjuvantien.

**3.** Zusammensetzung nach Anspruch 1 oder 2, **dadurch gekennzeichnet, daß** Komponente a) eine Verbindung der Formel (I-2) ist

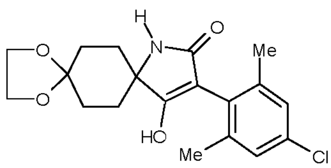

(I-2).

**4.** Zusammensetzung nach einem oder mehreren der vorhergehenden Ansprüche, **dadurch gekennzeichnet, daß** b) Flupyradifurone ist.

**5.** Zusammensetzung nach einem oder mehreren der Ansprüche 2-4, **dadurch gekennzeichnet, daß** die Komponenten enthaltend sind in

a) 2-15 Gew.-%
b) 2-15 Gew.-%
c) 15-30 Gew.-%
d) 10-30 Gew.-%
e) 0,5-2,5 Gew.-%.
f) 1-10 Gew.-%.
h) 0,05-6 Gew.-%.
g) zu einem Liter.

**6.** Zusammensetzung nach einem oder mehreren der vorhergehenden Ansprüche, enthaltend

a) die Verbindung mit der Formel (1-2) mit folgender Struktur:

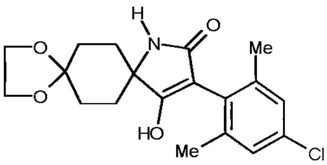
(I-2)

b) Flupyradifuron,
c) mindestens ein Ammoniumsalz ausgewählt aus der Gruppe bestehend aus Ammoniumsulfat (AMS) und Diammoniumhydrogenphosphat (DAHP),
d) mindestens ein Dispergiermittel, ausgewählt aus der Gruppe bestehend aus Alkylpolypropylenglycolpolyethylenglycol-Verbindungen der allgemeinen Formel (III-a)

R-O-A-B-H **(III-a)**

wobei R ein C1-C4-Fragment ist,
A ein Polypropylenglycol-Fragment bestehend aus 10 bis 40 Propylenoxid- (PO-) Einheiten (Formel III-b) ist,
B ein randomerisiert copolymerisiertes Polyethylenglycol-Polypropylenglycol-Fragment bestehend aus 10-50 Ethylenoxid- (EO-) Einheiten (Formel III-c) zusammen mit 0-10 Propylenglycol- (PO-) Einheiten ist,

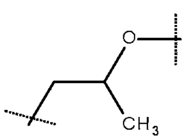
**Formel III-b**

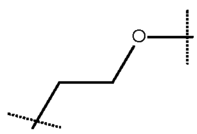
**Formel III-c**

und Alkylpolypropylenglycolpolyethylenglycol-Verbindungen der allgemeinen Formel (IIId),

$$R\text{-}O\text{-}(C_mH_{2m}O)_x\text{-}(C_nH_{2n}O)_y\text{-}R' \quad \text{(IIId)}$$

in welcher die einzelnen Reste und Indizes die folgenden Bedeutungen aufweisen:

R und R' stehen unabhängig voneinander für Wasserstoff, einen linearen $C_1$- bis $C_5$-Alkylrest oder einen verzweigten $C_3$- oder $C_4$-Alkylrest;
m gleich 2 oder 3 ist;
n gleich 2 oder 3 ist;

x gleich 5 bis 150 ist; und
y gleich 5 bis 150 ist,
wobei ein Rest n oder m die Bedeutung 2 und der andere Rest n oder m die Bedeutung 3 aufweist,

e) mindestens ein Tensid ausgewählt aus der Gruppe bestehend aus Polycarboxylat-Typen,
f) mindestens einen Füllstoff, ausgewählt aus der Gruppe bestehend aus pyrogenen Kieselsäuren und Attapulgiten,
g) Propylencarbonat als Lösungsmittel,
h) optional weitere Adjuvantien.

## Claims

**1.** Anhydrous composition containing:

a) at least one active ingredient a) solid at room temperature according to formula I,

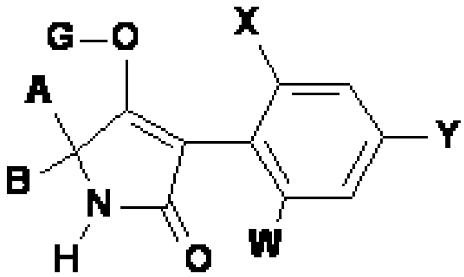

(I)

in which

W and Y independently of one another represent hydrogen, C1-C4 alkyl, chlorine, bromine, iodine or fluorine,
X is C1-C4-alkyl, C1-C4-alkoxy, chlorine, bromine or iodine,
A, B and the carbon atom to which they are bonded represent C3-C6-cycloalkyl which is substituted by an alkylenedioxyl group optionally substituted by C1-C4-alkyl or $C_1$-$C_4$-alkoxy-$C_1$-$C_2$-alkyl, which alkylenedioxyl group forms a 5-ring or 6-ring ketal with the carbon atom to which it is bonded,
G represents hydrogen (a) or one of the groups

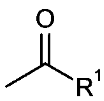 (b), 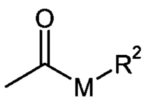 (c),

E (d)
in which

E represents a metal ion or an ammonium ion,
M represents oxygen or sulphur,
R1 represents a straight-chain or branched C1-C6 alkyl,
R2 represents a straight-chain or branched C1-C6 alkyl,

b) at least one active ingredient other than a), which is soluble in an organic solvent and is selected from the group consisting of imidacloprid, clothianidin, flupyradifurone and acetamiprid,
c) at least one ammonium salt selected from the group consisting of ammonium carbonate, ammonium hydrogen sulphate, ammonium sulphate (AMS), ammonium hydrogen carbonate and diammonium hydrogen phosphate (DAHP),
d) at least one dispersant selected from the group consisting of alkylpolypropylene glycolpolyethylene glycol compounds of the general formula (III-a),

R-O-A-B-H (III-a)

wherein R is a C1-C4 fragment,
A is a polypropylene glycol fragment consisting of 10 to 40 propylene oxide (PO) units (formula III-b)
B is a randomly copolymerised polyethylene glycol-polypropylene glycol fragment consisting of 10-50 ethylene oxide (EO) units (formula III-c) together with 0-10 propylene glycol (PO) units,

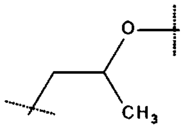
Formula III-b

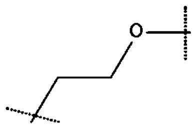
Formula III-c

and alkylpolypropylene glycol polyethylene glycol compounds of the general formula (IIId)

R-O-(CmH2mO)x-(CnH2nO)y-R' (IIId)

in which

R and R' independently of one another represent hydrogen, a linear $C_1$- to $C_5$-alkyl radical or a branched $C_3$- or $C_4$-alkyl radical;
m is 2 or 3;
n is 2 or 3;
x is 5 to 150; and
y is 5 to 150,
wherein one moiety n or m is 2 and the other moiety n or m is 3,

e) one or more surfactants selected from the group consisting of polycarboxylate types, salts of sulfated formaldehyde condensation products with alkylaromatics, salts of sulfated formaldehyde condensation products with ditolyl ether, salts of sulfated formaldehyde condensation products with cyclohexanone, and lignosulfonates and salts thereof,
f) at least one water-insoluble filler selected from the group consisting of modified natural silicates, silicate minerals, synthetic silicates and fumed silicas, attapulgites and fillers based on synthetic polymers,
g) at least one solvent selected from the group consisting of dimethyl carbonate, diethyl carbonate, dipropyl carbonate, diisopropyl carbonate, dibutyl carbonate and its isomers, diphenyl carbonate, ethylene carbonate, trimethylene carbonate, propylene carbonate, butylene carbonate, pentylene carbonate, hexylene carbonate and octylene carbonate,

wherein active ingredient a) is insoluble or only slightly soluble in the selected solvent g).

2. The composition according to claim 1, further containing
h) further adjuvants.

3. The composition according to claim 1 or 2, **characterised in that** component a) is a compound of the formula (1-2)

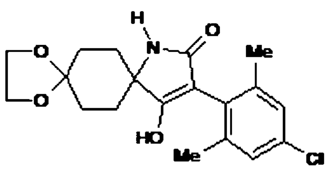
(I-2).

4. Composition according to one or more of the preceding claims, **characterised in that** b) is flupyradifurone.

5. The composition according to one or more of claims 2-4, **characterised in that** the components are contained in

a) 2-15% by weight
b) 2-15% by weight
c) 15-30% by weight
d) 10-30% by weight
e) 0.5-2.5% by weight.
f) 1-10% by weight.
h) 0.05-6% by weight.
g) to one litre.

**6.** The composition according to one or more of the preceding claims, containing

a) the compound of formula (I-2) having the following structure:

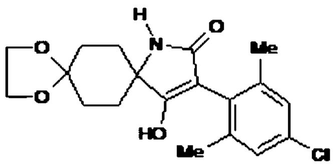
(I-2)

b) flupyradifurone,
c) at least one ammonium salt selected from the group consisting of ammonium sulfate (AMS) and diammonium hydrogen phosphate (DAHP),
d) at least one dispersant selected from the group consisting of alkylpolypropylene glycol polyethylene glycol compounds of the general formula (III-a)

R-O-A-B-H (III-a)

wherein R is a C1-C4 fragment,
A is a polypropylene glycol fragment consisting of 10 to 40 propylene oxide (PO) units (formula III-b)
B is a randomly copolymerised polyethylene glycol-polypropylene glycol fragment consisting of 10-50 ethylene oxide (EO) units (formula III-c) together with 0-10 propylene glycol (PO) units,

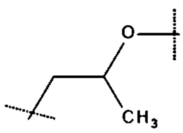
Formula III-b

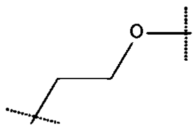
Formula III-c

and alkylpolypropylene glycol polyethylene glycol compounds of the general formula (IIId),

R-O-(CmH2mO)x-(CnH2nO)y-R' (IIId)

in which the individual moieties and indices have the following meanings:

R and R' independently of one another represent hydrogen, a linear $C_1$- to $C_5$-alkyl radical or a branched $C_3$- or $C_4$-alkyl radical;
m is 2 or 3;
n is 2 or 3;
x is 5 to 150; and
y is 5 to 150,
wherein one moiety n or m is 2 and the other moiety n or m is 3,

e) at least one surfactant selected from the group consisting of polycarboxylate types,
f) at least one filler selected from the group consisting of fumed silicas and attapulgites,
g) propylene carbonate as solvent,

h) optionally further adjuvants.

## Revendications

**1.** Composition anhydre contenant :

a) au moins une substance active solide à température ambiante a) selon la formule I,

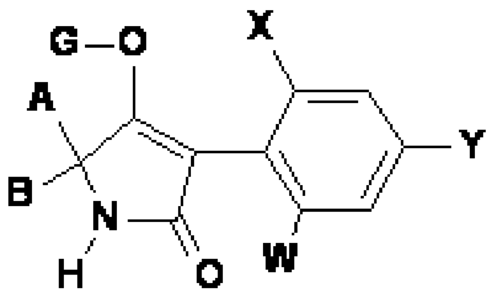

(I)

dans laquelle

W et Y représentent indépendamment les uns des autres un hydrogène, un alkyle en C1-C4, un chlore, un brome, un iode ou un fluor,
X représente un groupe alkyle en C1-C4, alcoxy en C1-C4, chloro, bromo ou iodo,
A, B et l'atome de carbone auquel ils sont liés représentent un cycloalkyle en C3-C6 substitué par un groupe alkylènedioxyle éventuellement substitué par un alkyle en C1-C4 ou un $C_1$-$C_4$-alcoxy-$C_1$-$C_2$-alkyle, qui forme avec l'atome de carbone auquel il est lié un cétal à 5 ou 6 cycles,
G représente l'hydrogène (a) ou l'un des groupes

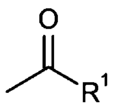 (b), 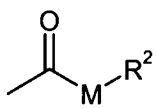 (c),

E (d)
dans lesquels

E représente un ion métallique ou un ion ammonium,
M représente l'oxygène ou le soufre,
R1 est un alkyle en C1-C6 à chaîne droite ou ramifiée,
R2 représente un groupe alkyle en C1-C6 à chaîne droite ou ramifiée,

b) au moins une substance active soluble dans un solvant organique, différente de a), choisie dans le groupe constitué par l'imidaclopride, la clothianidine, la flupyradifurone et l'acétamipride,
c) au moins un sel d'ammonium constitué de carbonate d'ammonium, hydrogénosulfate d'ammonium, sulfate d'ammonium (AMS), hydrogénocarbonate d'ammonium et hydrogénophosphate de diammonium (DAHP),
d) au moins un agent dispersant choisi dans le groupe constitué par les composés d'alkylpolypropylèneglycolpolyéthylèneglycol de formule générale (III-a),

R-O-A-B-H (III-a)

dans laquelle R est un fragment en C1-C4,
A est un fragment de polypropylène glycol constitué de 10 à 40 unités d'oxyde de propylène (PO) (formule III-b),
B est un fragment de polyéthylène glycol-polypropylène glycol copolymérisé de façon aléatoire constitué de

10 à 50 unités d'oxyde d'éthylène (EO) (formule III-c) avec 0 à 10 unités de propylène glycol (PO),

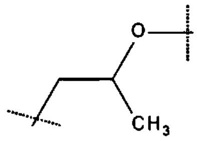

Formule III-b

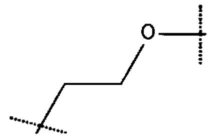

Formule III-c

et des composés alkylpolypropylèneglycolpolyéthylèneglycol de formule générale (IIId)

R-O-(CmH2mO)x- (CnH2nO)y-R' (IIId)

dans laquelle

R et R' représentent indépendamment les uns des autres un hydrogène, un radical alkyle linéaire en $C_1$ à $C_5$ ou un radical alkyle ramifié en $C_3$ ou $C_4$ ;
m est égal à 2 ou 3 ;
n est égal à 2 ou 3 ;
x est égal à 5 à 150 ; et
y est égal à 5 à 150,
dans laquelle un radical n ou m est égal à 2 et l'autre radical n ou m est égal à 3,

e) un ou plusieurs agents tensioactifs constitués de types polycarboxylates, de sels de produits de condensation de formaldéhyde sulfaté avec des composés alkylaromatiques, de sels de produits de condensation de formaldéhyde sulfaté avec de l'éther ditolyle, de sels de produits de condensation de formaldéhyde sulfaté avec de la cyclohexanone, et de lignosulfonates et leurs sels,
f) au moins une charge insoluble dans l'eau choisie dans le groupe constitué par les silicates naturels modifiés, les minéraux silicatés, les silicates synthétiques et les silices pyrogénées, les attapulgites et les charges à base de polymères synthétiques,
g) au moins un solvant choisi dans le groupe constitué du carbonate de diméthyle, du carbonate de diéthyle, du carbonate de dipropyle, du carbonate de diisopropyle, du carbonate de dibutyle et de ses isomères, du carbonate de diphényle, du carbonate d'éthylène, du carbonate de triméthylène, du carbonate de propylène, du carbonate de butylène, du carbonate de pentylène, du carbonate d'hexylène et du carbonate d'octylène,

dans laquelle la substance active a) est insoluble ou peu soluble dans le solvant g) choisi.

**2.** Composition selon la revendication 1, contenant en outre
h) d'autres adjuvants.

**3.** Composition selon la revendication 1 ou 2, **caractérisée en ce que** le composant a) est un composé de formule (I-2)

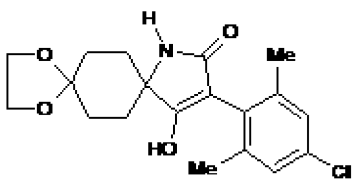

(I-2).

**4.** Composition selon une ou plusieurs des revendications précédentes, **caractérisée en ce que** b) est la flupyradifurone.

**5.** Composition selon une ou plusieurs des revendications 2 à 4, **caractérisée en ce que** les composants contiennent **en ce que**

a) 2-15 % en poids
b) 2-15 % en poids
c) 15-30 % en poids

d) 10-30 % en poids
e) 0,5-2,5 % en poids.
f) 1-10 % en poids.
h) de 0,05 à 6 % en poids.
g) à un litre.

**6.** Composition selon l'une ou plusieurs des revendications précédentes, contenant

a) le composé de formule (I-2) ayant la structure suivante :

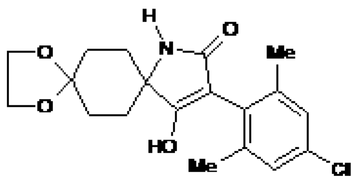
(I-2)

b) Flupyradifuron,
c) au moins un sel d'ammonium choisi dans le groupe constitué par le sulfate d'ammonium (AMS) et l'hydrogénophosphate de diammonium (DAHP),
d) au moins un agent dispersant choisi dans le groupe constitué par les composés d'alkylpolypropylèneglycolpolyéthylèneglycol de formule générale (III-a)

R-O-A-B-H (III-a)

dans laquelle R est un fragment en C1-C4,
A est un fragment de polypropylène glycol constitué de 10 à 40 unités d'oxyde de propylène (PO) (formule III-b),
B est un fragment de polyéthylène glycol-polypropylène glycol copolymérisé randomisé constitué de 10 à 50 unités d'oxyde d'éthylène (EO) (formule III-c) avec 0 à 10 unités de propylène glycol (PO),

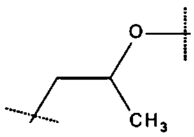
Formule III-b

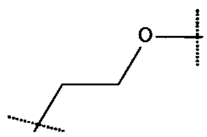
Formule III-c

et des composés alkylpolypropylèneglycolpolyéthylèneglycol de formule générale (IIId),

R-O-(CmH2mO)x- (CnH2nO)y-R' (IIId)

dans laquelle les différents radicaux et indices ont les significations suivantes :

R et R' représentent indépendamment les uns des autres un hydrogène, un radical alkyle linéaire en $C_1$ à $C_5$ ou un radical alkyle ramifié en $C_3$ ou $C_4$ ;
m est égal à 2 ou 3 ;
n est égal à 2 ou 3 ;
x est égal à 5 à 150; et
y est égal à 5 à 150,
dans laquelle l'un des n ou m est égal à 2 et l'autre des n ou m est égal à 3,

e) au moins un agent tensioactif choisi dans le groupe constitué par les types de polycarboxylates,
f) au moins une charge constituée de silice pyrogénée et d'attapulgites,
g) du carbonate de propylène comme solvant,
h) éventuellement d'autres adjuvants.

FIGUR 1:

**Fig. 1: Röntgenbeugungsmuster von I-2 (Mod. A)**

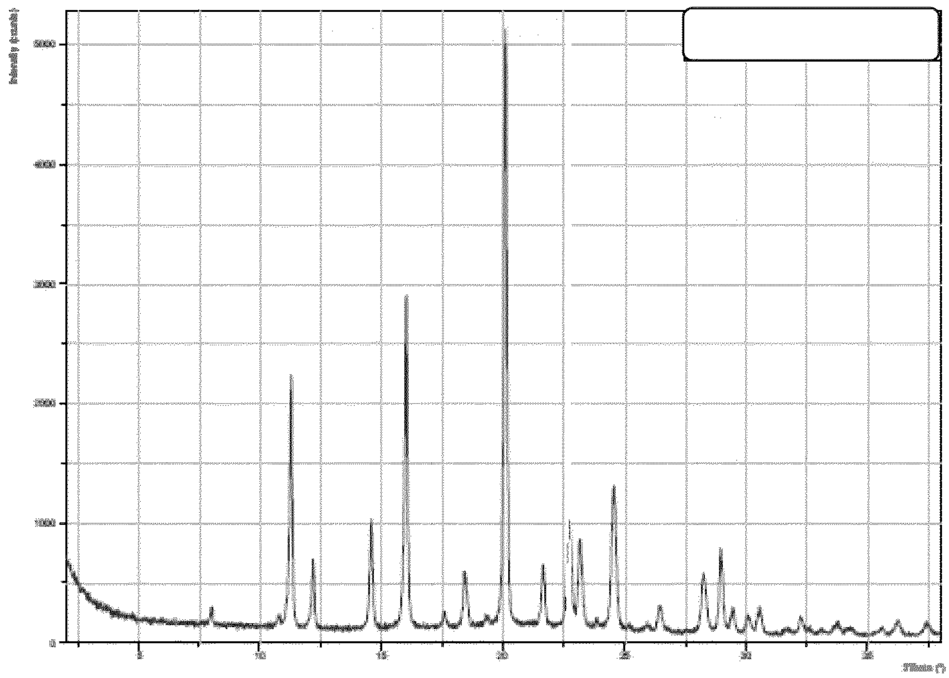

FIGUR 2 :

FIG. 2: IR-Spektrum

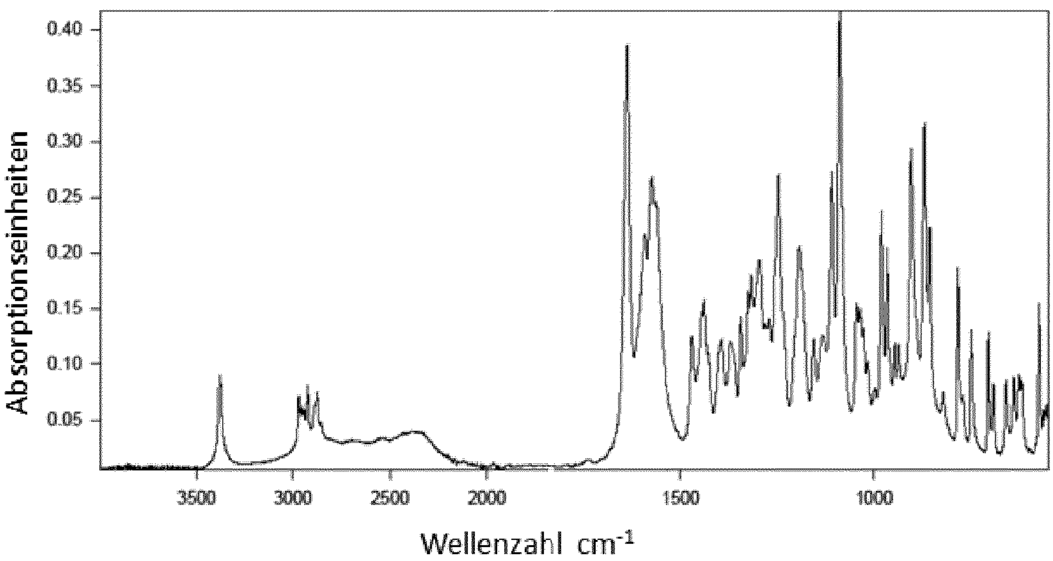

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006089661 A
- US 20080255204 A1, Davies
- WO 2011029552 A
- WO 2003000053 A
- WO 2011131623 A
- US 20110281727 A1, Fischer
- WO 2007068428 A
- WO 2008151725 A
- EP 2193712 A1
- WO 2009115262 A
- WO 2008037375 A
- WO 06089633 A
- WO 08067911 A
- WO 2008036865 A2